# EUROPÄISCHE PATENTSCHRIFT

(11) **EP 4 413 306 B1**
(45) Veröffentlichungstag und Bekanntmachung des Hinweises auf die Patenterteilung: **03.12.2025**
(21) Anmeldenummer: 22799929.9
(22) Anmeldetag: 05.10.2022
(51) Int. Cl.: F24S 25/30, F24S 25/65, H02S 20/20

(54) **TRAGELEMENT ZUM TRAGEN EINES SOLARMODULS**
SUPPORT ELEMENT FOR SUPPORTING A SOLAR MODULE
ÉLÉMENT PORTEUR SERVANT AU SUPPORT D'UN MODULE SOLAIRE

(30) Priorität: 05.10.2021 DE 102021125841
(43) Veröffentlichungstag der Anmeldung: 14.08.2024
(73) Patentinhaber: Schletter International B.V., 1101 Amsterdam (NL)
(72) Erfinder: ZAPFE, Cedrik, 85567 Grafing (DE); ELSNER, Tilmann, 83451 Piding (DE); BRAUNERSREUTHER, Korbinian, 83539 Pfaffing (DE)
(74) Vertreter: Mötsch, Andreas
(86) Internationale Anmeldenummer: PCT/EP2022/077704
(87) Internationale Veröffentlichungsnummer: WO 2023/057517

(56) Entgegenhaltungen:
- EP-A1- 2 813 783
- EP-A1- 3 205 953
- EP-B1- 2 587 185
- WO-A1-2014/020006
- WO-A1-2019/143701
- WO-A1-2021/119458
- DE-A1- 102009 012 026
- DE-U1- 202007 003 060
- FR-A1- 2 975 474
- JP-B2- 5 784 887
- US-A1- 2002 197 106
- US-A1- 2013 082 014
- US-B2- 8 398 000

## Beschreibung

Die vorliegende Erfindung betrifft ein Tragelement zum Tragen eines Solarmoduls. Ferner betrifft die vorliegende Erfindung ein Tragsystem zum Anbringen von Solarmodulen an einem Dach, insbesondere an einem Flachdach.

Zum Stand der Technik kann auf das Dokument FR 2 975 474 A1 verwiesen werden. Dieses Dokument offenbart ein extrudiertes Profil für einen Trägerrahmen für ein Photovoltaikpaneel. Das Profil weist zwei Seitenflächen auf, die senkrecht zu einer Unterseite angeordnet sind und sich auf derselben Seite der Unterseite erstrecken. Ein oberer Teil liegt der Unterseite gegenüber. Der obere Teil hat an einer Längskante entlang einer Extrusionsrichtung des Profils eine Biegung. Die Biegung ist dabei entgegengesetzt zur Unterseite ausgerichtet. Der obere Teil weist einen L-förmigen Rückführabschnitt auf, der oberhalb der Biegung angeordnet ist und ein Klemmelement zum Einklemmen einer Kante eines Photovoltaikmoduls bildet. Die Seitenflächen weisen drei abgerundete Rillen auf, die eine Gleitbahn auf den Seitenflächen bilden

Es ist eine Aufgabe der vorliegenden Erfindung ein Tragelement zum Tragen eines Solarmodules bereitzustellen, das flexibel einsetzbar sowie schnell und einfach mit weiteren Tragelementen verbindbar ist.

Diese Aufgabe wird mit einem Tragelement zum Tragen eines Solarmoduls mit den Merkmalen des Patentanspruchs 1 gelöst.

Weitere Ausführungsformen sind in den abhängigen Ansprüchen angegeben.

Das Tragelement für ein Tragsystem zum Tragen eines Solarmoduls weist wenigstens einen ersten Koppelabschnitt und wenigstens einen zweiten Koppelabschnitt auf. Der wenigstens eine erste Koppelabschnitt hat wenigstens eine Einhakaufnahme und wenigstens eine Rastformation, wobei die wenigstens eine Rastformation an einer Außenseite und/oder einer Innenseite des Tragelements ausgebildet ist.

Mit dem wenigstens einen ersten Koppelabschnitt kann das Tragelement mit einem korrespondierenden Tragelement verbunden werden, ohne dass zusätzliche Befestigungsmittel benötigt werden. Die Verbindung erfolgt ausschließlich über die wenigstens eine Einhakaufnahme und die wenigstens eine Rastformation. Die wenigstens eine Einhakaufnahme kann einen Schwenkpunkt oder einen Schwenkbereich festlegen, um den das Tragelement zum Verrasten mit einem korrespondierenden Tragelement verschwenkt werden kann. Der wenigstens eine zweite Koppelabschnitt kann derart ausgebildet sein, dass er zur Verbindung mit einem weiteren Tragelement und/oder zur Kopplung mit einem Solarmodul dienen kann. Die beiden Koppelabschnitte erlauben somit eine flexible Verbindung des Tragelements mit weiteren Komponenten eines Tragsystems für Solarmodule.

Der wenigstens eine erste Koppelabschnitt weist wenigstens eine Längsnut auf, die zur Aufnahme wenigstens eines Verbindungselements ausgebildet ist. Das Verbindungselement kann beispielsweise zur Verbindung mit einer Basisschiene verwendet werden. Das Verbindungselement kann drehfest über eine Presspassung in der Längsnut aufgenommen sein. Der wenigstens eine erste Koppelabschnitt kann somit nicht nur zur Verbindung mit einem korrespondierenden Tragelement sondern auch zur Verbindung mit einem Verbindungselement bzw. mit einer Basisschiene dienen. Der erste Koppelabschnitt kann somit eine variable Verbindungschnittstelle bilden.

Die wenigstens eine Längsnut ist zwischen der wenigstens einen Rastformation und der wenigstens einen Einhakaufnahme angeordnet. Die wenigstens eine Längsnut kann in einer Richtung parallel zum Boden des Tragelements zwischen der wenigstens einen Rastformation und der wenigstens einen Einhakaufnahme angeordnet sein. Die wenigstens eine Längsnut kann wenigstens eine Nutöffnung aufweisen. Die wenigstens eine Nutöffnung kann sich zwischen der wenigstens einen Einhakaufnahme und der wenigstens einen Rastformation erstrecken. Die wenigstens eine Längsnut kann Halteränder aufweisen, die die wenigstens eine Nutöffnung zwischen sich festlegen. Die wenigstens eine Rastformation kann außen an einer Wand der wenigstens einen Längsnut vorgesehen sein.

Die wenigstens eine Rastformation kann wenigstens eine Rastnase aufweisen. Die wenigstens eine Rastformation kann wenigstens einen Rastvorsprung aufweisen. Die wenigstens eine Rastformation kann wenigstens eine Einführschräge aufweisen. Die wenigstens eine Einführschräge kann sich zwischen dem Boden des Tragelements und der Rastnase erstrecken. Die wenigstens eine Rastnase und der wenigstens eine Rastvorsprung können sich nach außen erstrecken. Die wenigstens eine Rastnase und der wenigstens eine Rastvorsprung können zwischen sich wenigstens eine Rastausnehmung festlegen.

Die wenigstens eine Einhakaufnahme kann nach außen geöffnet sein. Die wenigstens eine Einhakaufnahme kann im Bereich einer Seitenwand des Tragelements angeordnet sein. Die Öffnung der wenigstens eine Einhakaufnahme kann sich zwischen dem Boden des Tragelements und der Seitenwand erstrecken. Die wenigstens eine Einhakaufnahme kann gekrümmt ausgebildet sein. Die Krümmung der Einhakaufnahme kann zur Bildung eines Schwenkpunkts oder eines Schwenkbereichs dienen.

Der wenigstens eine zweite Koppelabschnitt kann derart ausgebildet sein, dass er eine Aufnahme für einen ersten Koppelabschnitt eines korrespondierenden Tragelements bilden. Der wenigstens eine zweite Koppelabschnitt kann wenigstens eine Rastformation aufweisen, die an einer Außenseite oder an einer Innenseite des wenigstens einen Tragelements ausgebildet ist. Die Rastformation kann wenigstens einen Rastvorsprung aufweisen. Die wenigstens eine Rastformation kann sich von einer Innenseite einer Seitenwand des Tragelements in Richtung einer gegenüberliegenden Seitenwand erstrecken. An einer dieser Seitenwände kann wenigstens ein Stützabschnitt vorgesehen sein, der zur Abstützung eines mit der Rastformation verrasteten Tragelements dienen kann.

Der wenigstens eine zweite Koppelabschnitt kann einen nach innen gerichteten Haken aufweisen. Der nach innen gerichtete Haken kann sich am Ende einer Seitenwand des Tragelements befinden. Die Rastformation und der Haken können einander zugewandt sein. Der wenigstens eine Haken kann gekrümmt ausgebildet sein. Die wenigstens eine innere Rastformation und der wenigstens eine Haken können aufeinander zu gerichtet sein.

Der erste Koppelabschnitt oder der zweite Koppelabschnitt können wenigstens einen gekrümmten Seitenwandabschnitt aufweisen. Der gekrümmte Seitenwandabschnitt kann einen Endabschnitt einer Seitenwand des Tragelements bilden. Der gekrümmte Seitenwandabschnitt kann nach innen oder nach außen gekrümmt sein. Der gekrümmte Seitenwandabschnitt kann nach innen in Richtung der gegenüberliegenden Seitenwand des Tragelements gekrümmt sein. Der gekrümmte Seitenwandabschnitt kann sich in Richtung des freien Endes der Seitenwand erstrecken. Die wenigstens eine Rastformation kann an dem wenigstens einen gekrümmten Seitenwandabschnitt ausgebildet sein. Durch die Krümmung des Endwandabschnitts kann eine Art Vorspannung erreicht werden, da bei der Verrastung mit einem korrespondierenden Tragelement der gekrümmte Seitenwandabschnitt zunächst nach außen bewegt werden und dann nach innen schnappen kann, damit die Rastformationen der korrespondierenden Tragelemente einen Formschluss herstellen können. Eine derartige Verbindung kann auch als KlickVerbindung bezeichnet werden.

Die wenigstens eine Rastformation, die wenigstens eine Einhakaufnahme und die wenigstens eine Längsnut des ersten Koppelabschnitts können gemeinsam an einem Endbereich des Tragelements angeordnet sein. Der zweite Koppelabschnitt kann an einem zu dem ersten Koppelabschnitt entgegengesetzten Endbereich des Tragelements vorgesehen sein.

Der erste Koppelabschnitt und der zweite Koppelabschnitt können gelenkig miteinander verbunden sein. Der erste Koppelabschnitt oder der zweite Koppelabschnitt können wenigstens eine Achsaufnahme aufweisen. Der jeweils andere erste oder zweite Koppelabschnitt kann wenigstens einen Achsabschnitt aufweisen, der in der wenigstens einen Achsaufnahme aufgenommen ist. Der zweite Koppelabschnitt kann eine Auflagefläche für die Auflage eines Solarmoduls aufweisen. Die gelenkige Verbindung zwischen dem ersten Koppelabschnitt und dem zweiten Koppelabschnitt ermöglicht eine flächige Auflage des Solarmoduls auf der Auflagefläche des zweiten Koppelabschnitts.

Der zweite Koppelabschnitt kann einen Auflageabschnitt für einen Rahmen eines Solarmodules aufweisen. Der wenigstens eine Auflageabschnitt kann eine Auflagefläche aufweisen, auf der der Rahmen des Solarmoduls aufliegen kann. Der wenigstens eine Auflageabschnitt kann wenigstens eine Längsnut aufweisen. Die Nutöffnung der Längsnut kann von Halterändern der Längsnut begrenzt werden.

Die vorliegende Erfindung betrifft ferner ein Tragesystem mit einem Verbindungsprofil zur Verbindung von wenigstens zwei Schienen. Das Verbindungsprofil weist wenigstens ein Halteelement auf. Das Halteelement hat wenigstens eine Kralle, die dazu ausgebildet ist, das Verbindungsprofil an zumindest einer der Schienen zu halten.

Das wenigstens eine Verbindungsprofil kann dazu ausgebildet sein, um durch eine translatorische Bewegung mit wenigstens einer der Schienen gekoppelt werden zu können. Beispielsweise kann das wenigstens eine Verbindungsprofil derart ausgebildet sein, dass das Verbindungsprofil mit zumindest einer der Schienen in

Eingriff bringbar ist. Das Verbindungsprofil kann wenigstens eine Führungsbahn aufweisen, in die die Schienen eingreifen können. Dadurch kann erreicht werden, dass die Schiene zumindest abschnittsweise auf das Verbindungsprofil aufgeschoben werden können. Alternativ ist es ebenfalls möglich, dass das wenigstens eine Verbindungsprofil derart ausgebildet ist, dass es in zumindest eine der Schienen eingesteckt werden kann. Das Verbindungsprofil kann schienenförmig ausgebildet sein.

Das wenigstens eine Verbindungsprofil kann ferner wenigstens ein Anschlagelement aufweisen. Das wenigstens eine Anschlagelement kann eine Endposition für zumindest eine der beiden Schienen an dem wenigstens einen Verbindungsprofil definieren. Das wenigstens eine Anschlagelement kann die Endposition für die beiden Schienen an dem Verbindungsprofil festlegen. Sind die beiden Schienen mit dem Verbindungsprofil verbunden, kann das wenigstens eine Anschlagelement zwischen den Enden der beiden Schienen angeordnet sein.

Die wenigstens eine Kralle kann derart ausgebildet sein, dass sie eine Relativbewegung zwischen dem Verbindungsprofil und einer der Schienen zumindest in einer Richtung verhindert. Die wenigstens eine Kralle kann sich schräg oder abgewinkelt zu dem Verbindungsprofil erstrecken.

Das wenigstens eine Halteelement kann wenigstens zwei Krallen aufweisen. Die wenigstens zwei Krallen können sich aufeinander zu erstrecken. Zwischen zwei der Krallen kann wenigstens ein Anschlagelement vorgesehen sein. Die Krallen können sich schräg auf das wenigstens eine Anschlagelement zu erstrecken. Die schräge Erstreckung der wenigstens einen Kralle ermöglicht ein Aufschieben oder Einführen des Verbindungsprofils in oder auf die Schiene in der Aufschiebe- oder Einführrichtung. In entgegengesetzter Richtung kann sich die wenigstens eine Kralle in der Schiene verhaken und so eine Bewegung der Schiene oder des Verbindungsprofils in Löserichtung, die die der Aufschiebe- oder Einführrichtung entgegengesetzt ist, verhindern.

Das wenigstens eine Halteelement kann an einer Oberseite oder einer Unterseite des wenigstens einen Verbindungsprofils angebracht sein. Das Halteelement kann über eine Pressverbindung an dem Verbindungsprofil angebracht sein. Das wenigstens eine Halteelement kann über einen Formschluss an dem Verbindungsprofil angebracht sein. Beispielsweise kann an dem Verbindungsprofil ein Zapfen ausgebildet sein. Dieser Zapfen kann in eine Öffnung an dem Halteelement eingreifen, um das wenigstens eine Halteelement an dem Verbindungsprofil zu halten. Zusätzlich oder alternativ kann an dem Halteelement ein Vorsprung oder ein zapfenähnliches Element ausgebildet werden, dass sich in das Verbindungsprofil hinein erstreckt, um eine Verbindung zwischen dem wenigstens einen Halteelement und dem Verbindungsprofil herzustellen.

Die vorliegende Erfindung betrifft ferner ein Tragsystem mit einem Verbindungsystem mit einem Verbindungsprofil der voranstehend beschriebenen Art und wenigstens einer Schiene. Das Verbindungsprofil und die wenigstens eine Schiene können korrespondierend ausgebildet sein, um über eine translatorische Bewegung verbindbar zu sein.

Die über das Verbindungsprofil zu verbindenden Schienen können zwei Basisschienen oder zwei Ballastschienen sein.

Die vorliegende Erfindung betrifft ferner ein Tragsystem für ein Solarmodul, insbesondere zur Anbringung von Solarmodulen an einem Flachdach. Das Tragsystem umfasst wenigstens ein Tragelement der voranstehend beschriebenen Art und wenigstens eine Basisschiene, die mit dem wenigstens einem Tragelement verbindbar ist.

Das Tragsystem kann mehrere Tragelemente aufweisen. An der wenigstens einen Basisschiene können wenigstens zwei Tragelemente angeordnet sein, die zum Abstützen eines Solarmoduls zusammenwirken.

Das Tragsystem kann wenigstens eine Tragschiene zum Tragen von Ballastkörpern aufweisen. Zusätzlich oder alternativ kann die wenigstens eine Basisschiene zum Tragen von Ballastkörpern ausgebildet sein. Die wenigstens eine Tragschiene kann mit der wenigstens einen Basisschiene gekoppelt werden.

Das Tragsystem kann wenigstens ein Verbindungsprofil zum Verbinden von zwei Schienen aufweisen. Die mit einem Verbindungsprofil zu verbindenden Schienen können Ballastschienen oder Basisschienen der voranstehend beschriebenen Art sein.

Das Tragsystem kann zum Tragen von rahmenlosen Solarmodulen oder von gerahmten Solarmodulen ausgebildet sein, die einen Rahmen aufweisen. In dem letztgenannten Fall kann der Rahmen als Teil des Solarmoduls verstanden werden.

Die Solarmodule können über eine oder mehrere Modulklemmen an dem Tragsystem gehalten werden.

Im Folgenden werden beispielhafte Ausführungsformen der Erfindung mit Bezug auf die beigefügten Figuren beschrieben. Es stellen dar:
- Figur 1: eine perspektivische Ansicht eines Tragelements gemäß einer Ausführungsform der Erfindung;
- Figur 2: eine Vorderansicht des Tragelements gemäß Figur 1;
- Figur 3: eine Vorderansicht des Tragelements gemäß der Figuren 1 und 2 mit einem eingesetzten Verbindungselement;
- Figur 4: eine perspektivische Ansicht eines Tragelements gemäß einer weiteren Ausführungsform der Erfindung;
- Figur 5: eine Vorderansicht des Tragelements gemäß Figur 4;
- Figur 6: eine Vorderansicht des Tragelements gemäß Figur 4 und 5 mit einem eingesetzten Verbindungselement;
- Figur 7: eine perspektivische Ansicht eines Tragelements gemäß der Figuren 1 und 2 und eines Tragelements gemäß der Figuren 3 und 4 im verbundenen Zustand;
- Figur 8: eine Vorderansicht eines Tragelements gemäß der Figuren 1 und 2 und eines Tragelements gemäß der Figuren 3 und 4 während der Verbindung der beiden Tragelemente;
- Figur 9: eine Vorderansicht eines Tragelements gemäß der Figuren 1 und 2 und eines Tragelements gemäß der Figuren 3 und 4 im verbundenen Zustand;
- Figur 10: eine perspektivische Ansicht eines Tragelements gemäß der Figuren 1 und 2 und eines Tragelements gemäß der Figuren 3 und 4 im an einer Basisschiene angebrachten Zustand;
- Figur 11: perspektivische Ansicht der Basisschiene;
- Figur 12: eine Vorderansicht der Basisschiene;
- Figur 13: eine perspektivische Ansicht eines Verbindungsprofils gemäß einem Ausführungsbeispiel;
- Figur 14: eine Vorderansicht des Verbindungsprofils gemäß Figur 13;
- Figur 15: eine Ansicht einer Basisschiene gemäß Figur 11 mit zwei Verbindungsprofilen gemäß der Figuren 13 und 14 im zusammengesetzten Zustand;
- Figur 16: eine perspektivische Ansicht der Basisschiene gemäß Figur 15 mit den beiden Verbindungsprofilen;
- Figur 17: eine perspektivische Ansicht einer Ballastschiene;
- Figur 18: eine Vorderansicht der Ballastschiene gemäß Figur 17;
- Figur 19: eine perspektivische Ansicht eines Verbindungsprofils gemäß einem zweiten Ausführungsbeispiel;
- Figur 20: eine Vorderansicht des Verbindungsprofils gemäß Figur 19;
- Figuren 21 und 22: Ansichten einer Ballastschiene und eines Verbindungsprofils im zusammengesetzten Zustand;
- Figur 23: eine perspektivische Ansicht eines Haltelements für die Verbindungsprofile gemäß dem ersten und dem zweiten Ausführungsbeispiel;
- Figur 24 bis 26: Ansichten von Tragsystemen mit unterschiedlichen Winkeln;
- Figur 27: eine perspektivische Ansicht von verschiedenen Anordnungsmöglichkeiten von Solarmodulen mit dem erfindungsgemäßen Tragsystem; und
- Figur 28: eine weitere perspektivische Ansicht eines Tragsystems gemäß der Erfindung.

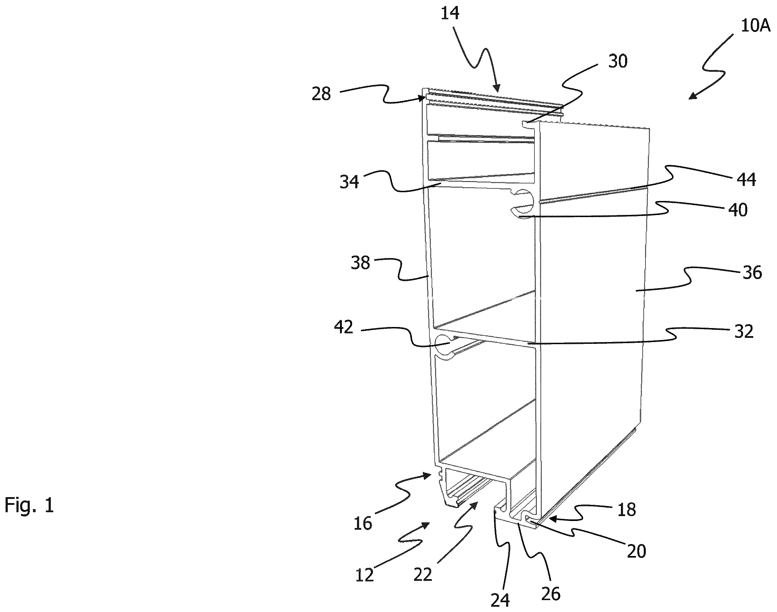

Figur 1 zeigt eine perspektivische Ansicht eines Tragelements 10A gemäß einer ersten Ausführungsform. Das Tragelement 10A ist als Profilelement ausgebildet. Insbesondere ist das Tragelement 10A als Hohlprofil ausgebildet. Das Tragelement 10A weist einen ersten Koppelabschnitt 12 und einen zweiten Koppelabschnitt 14 auf. Der erste Koppelabschnitt 14 umfasst eine äußere Rastformation 16 und eine Einhakaufnahme 18. Die äußere Rastformation 16 ist an einer Außenseite des Tragelements 10 ausgebildet. Die Einhakaufnahme 18 ist nach außen geöffnet und weist dementsprechend eine Öffnung 20 auf. Die Öffnung 20 und die äußere Rastformation 16 sind an entgegengesetzten Außenseiten des Tragelements 10 vorgesehen. Zwischen der äußeren Rastformation 16 und der Einhakaufnahme 18 ist eine Längsnut 22 für ein Verbindungselement (nicht gezeigt) vorgesehen. Die Längsnut 22 weist eine Nutöffnung 24 auf. Die Nutöffnung 24 ist an dem Boden 26 des Tragelements 10A ausgebildet. Die Nutöffnung 24 ist zwischen der äußeren Rastformation 16 und der Einhakaufnahme 18 ausgebildet. Mit dem Boden 16 bzw. der zu dem Boden gehörenden Bodenfläche kann das Tragelement 10A auf einer nicht gezeigten Basisschiene befestigt werden.

Der zweite Koppelabschnitt 14 weist eine innere Rastformation 28 und einen Haken 30 auf. Die innere Rastformation 28 ist an einer Innenseite des Tragelements 10A vorgesehen. Die innere Rastformation 28 und der Haken 30 sind aufeinander zu gerichtet. Der Haken 30 ist gekrümmt ausgebildet, um eine Schwenkbewegung zur Verrastung mit einem korrespondierenden Tragelement (nicht gezeigt) zu unterstützen.

Das Tragelement 10A weist zwei Stege 32 und 34 auf, die die Seitenwände 36 und 38 des Tragelements 10 verbinden. Das Tragelement 10A weist ferner Schraubkanäle 40 und 42 für Kabelführungen und/oder Zusatzelemente auf. Die Schraubkanäle 40, 42 sind im Inneren des Tragelements 10 angeordnet. Jeder Schraubkanal 40, 42 weist eine schlitzförmige Öffnung auf. Die Schraubkanäle 40, 42 sind jeweils an einem Übergang zwischen einem der Stege 32, 34 und der Innenseite einer der Seitenwände 36, 38 vorgesehen. An der Seitenwand 36 ist eine Rille 44 erkennbar, die sich entlang der Seitenwand erstreckt. Durch die Rille 44 wird die Position des Schraubkanals 40 im Inneren des Tragelements 10 angezeigt. Mit anderen Worten zeigt die Rille 44 die Position und den Verlauf des Schraubkanals 40 im Inneren des Tragelements 10A an. Auch die Position des Schraubkanals 42 wird über eine Rille an der Außenseite der Seitenwand 38 angezeigt. Diese Rille ist jedoch in Figur 1 nicht vollständig erkennbar.

Der erste Koppelabschnitt 12 und der zweite Koppelabschnitt 14 sind an entgegengesetzten Endabschnitten des Tragelements 10 angeordnet. Zwischen den beiden Koppelabschnitten 12 und 14 sind die voranstehend beschriebenen Stege 32, 34 und die Schraubkanäle 40, 42 vorgesehen. Der erste Koppelabschnitt 12 kann gemäß Figur 1 an einem unteren Endbereich und der zweite Koppelabschnitt 14 kann gemäß Figur 1 an einem oberen Endbereich vorgesehen sein.

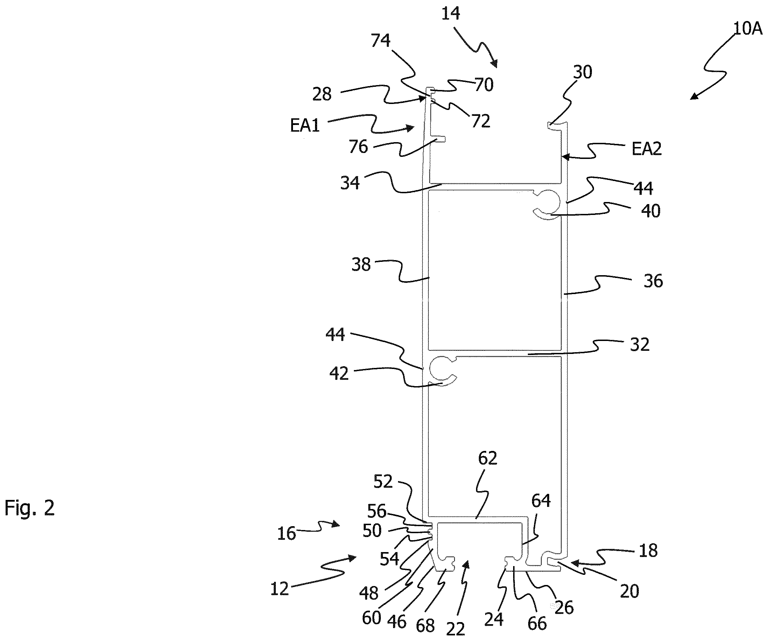

Figur 2 zeigt eine Vorderansicht des Tragelements 10A. Die beiden Koppelabschnitte 12 und 14 des Tragelements 10A sind an zueinander entgegengesetzten Endbereichen des Tragelements 10A vorgesehen. Die äußere Rastformation 16 des ersten Koppelabschnitts 12 weist eine Einführschräge 46, eine Rastnase 48 und einen Rastvorsprung 50 auf. Die Einführschräge 46 erstreckt sich zwischen dem Boden 26 des Tragelements 10 und der Rastnase 48, d. h. die Einführschräge 46 geht in die Rastnase 48 über. Die Rastnase 48 und der Rastvorsprung 50 erstrecken sich nach außen. Zwischen der Rastnase 48, dem Rastvorsprung 50 und einem Absatz 52, der den Übergang in die Seitenwand 38 bildet, werden Rastaufnahmen 54 und 56 gebildet. Die Rastaufnahmen 54, 56 können zur Aufnahme von korrespondierenden Rastelementen an einem nicht gezeigten Tragelement dienen.

Die äußere Rastformation 16 ist an der Außenseite einer Wand 60 der Längsnut 22 ausgebildet. Die Längsnut 22 weist neben der Wand 60, einen Nutboden 62, eine Wand 64 und Halteränder 66 und 68 auf. Die Halteränder 66 und 68 sind Teil des Bodens 26 des Tragelements 10A. Die Halteränder 66 und 68 legen zwischen sich die Nutöffnung 24 fest. An den Halterändern 66 und 68 kann ein Verbindungselement (nicht gezeigt) angreifen. Die Wand 64 hat zur Seitenwand 36 des Tragelements 10A einen vorbestimmten Abstand. Die Einhakaufnahme 18 ist zwischen dem Boden 26 und der Seitenwand 36 vorgesehen, d. h. die Öffnung 20 der Einhakaufnahme 18 erstreckt sich zwischen dem Boden 26 und der Seitenwand 36 des Tragelements 10A. Die Einhakaufnahme 18 ist gekrümmt ausgebildet, um eine Schwenkbewegung zwischen den zu verbindenden Tragelementen 10A zu unterstützen.

Der zweite Koppelabschnitt 14, d. h. der obere Koppelabschnitt, hat die innere Rastformation 18. Die innere Rastformation 18 umfasst zwei Rastvorsprünge 70 und 72. Die Rastvorsprünge 70 und 72 legen zwischen sich eine Rastaufnahme 74 fest. Die Rastvorsprünge 70 und 72 sind an der Seitenwand 38 vorgesehen und erstrecken sich nach innen. An der Seitenwand 38 ist ferner ein Stützvorsprung 76 vorgesehen, der zum Abstützen eines mit der Rastformation 18 verrasteten Tragelements (nicht gezeigt) dient. Auch der Stützvorsprung 76 erstreckt sich nach innen. An der Seitenwand 36 ist der Haken 30 vorgesehen. Der Haken 30 erstreckt sich nach innen. Die Vorsprünge 70, 72, 76 an der Seitenwand 38 und der Haken 30 an der Seitenwand 36 erstrecken sich aufeinander zu.

Die innere Rastformation 28 und der Stützvorsprung 76 sind an einem Seitenwandabschnitt EA1 der Seitenwand 38 ausgebildet. Der Seitenwandabschnitt EA1 erstreckt sich ausgehend von dem Steg 34 in Richtung des freien Endes der Seitenwand 38. Die innere Rastformation 28 ist an dem freien Ende der Seitenwand 38 ausgebildet. Der Seitenwandabschnitt EA1 ist nach innen gekrümmt. Die Krümmung beginnt nahezu an dem Steg 34 und setzt sich bis zum freien Ende der Seitenwand 38 fort. Durch die Krümmung des Endwandabschnitts EA1 kann die Wirkung einer vorgespannten Feder erzielt werden, da bei der Verrastung mit einem korrespondierenden Tragelement der Seitenwandabschnitt EA1 zunächst nach außen bewegt wird, bevor die innere Rastformation 28 mit einer äußeren Rastformation eines korrespondierenden Tragelements (nicht gezeigt) einen Formschluss herstellt.

Der Haken 30 ist an einem Endwandabschnitt EA2 der Seitenwand 36 ausgebildet. Der Endwandabschnitt EA2 erstreckt sich ausgehend von dem Steg 34 in Richtung des freien Endes der Seitenwand 36. Der Haken 30 ist an dem freien Ende der Seitenwand 36 ausgebildet.

Die Seitenwandabschnitte EA1 und EA2 bilden eine Aufnahme, die einen ersten Koppelabschnitt eines weiteren korrespondierenden Tragelements (nicht gezeigt) aufnehmen und mit diesem verrastet werden kann. Wird ein korrespondierender Haken (nicht gezeigt) eines korrespondierenden Tragelements mit der Einhakaufnahme 18 in Eingriff gebracht, kann eine Schwenkbewegung ausgeführt werden, um die beiden Tragelemente 10 miteinander zu verrasten. Aufgrund der Koppelabschnitte 12 und 14 des Tragelements 10 können mehrere der in den Figuren 1 und 2 gezeigten Tragelemente 10 miteinander verbunden werden, um unter anderem die Höhe des Solarmoduls über dem Dach und den Winkel des Solarmoduls einstellen zu können.

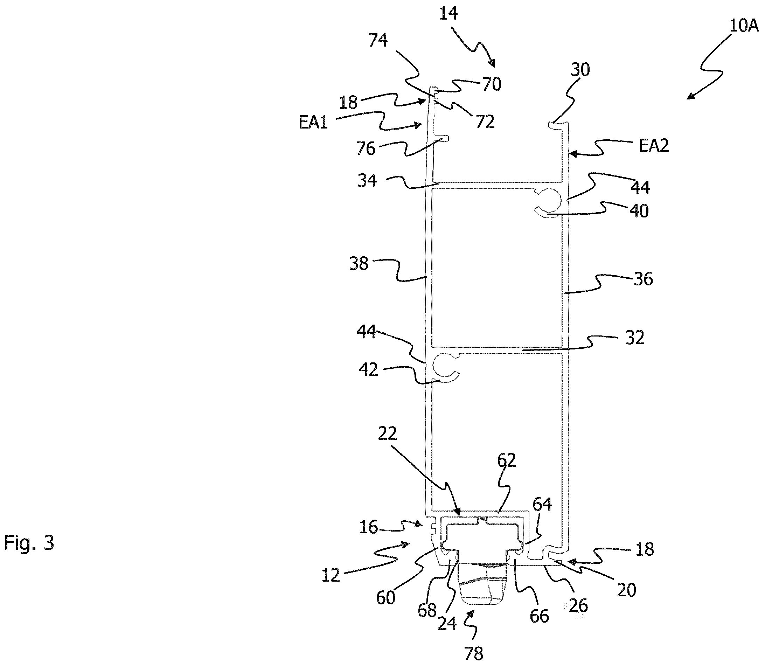

Figur 3 zeigt eine Ansicht des Tragelements 10A, die weitgehend der Vorderansicht gemäß Figur 2 entspricht. In der Ansicht gemäß Figur 3 wurde ein Verbindungselement 78 in die Längsnut 22 eingesetzt. Das Verbindungselement 78 ist drehfest in der Längsnut 22 aufgenommen. Das Verbindungselement 78 stützt sich an den Wänden 60, 64, dem Nutboden 62 und den Halterändern 66, 68 der Längsnut 22 ab.

In dem in Figur 3 gezeigten Zustand bildet das Tragelement 10A mit dem Verbindungselement 78 eine Baugruppe. Das Verbindungselement 78 steht durch die Nutöffnung 24 aus der Längsnut 22 vor. Das Verbindungselement 78 kann mit seinem aus der Nutöffnung 24 vorstehenden Abschnitt beispielsweise in eine korrespondierende Längsnut einer Schiene (nicht gezeigt) eingesetzt werden. Durch eine Drehbewegung des Tragelements 10 und des darin aufgenommenen Verbindungselement 78 kann das Tragelement 10 über das Verbindungselement 78 mit der nicht gezeigten Schiene verbunden werden.

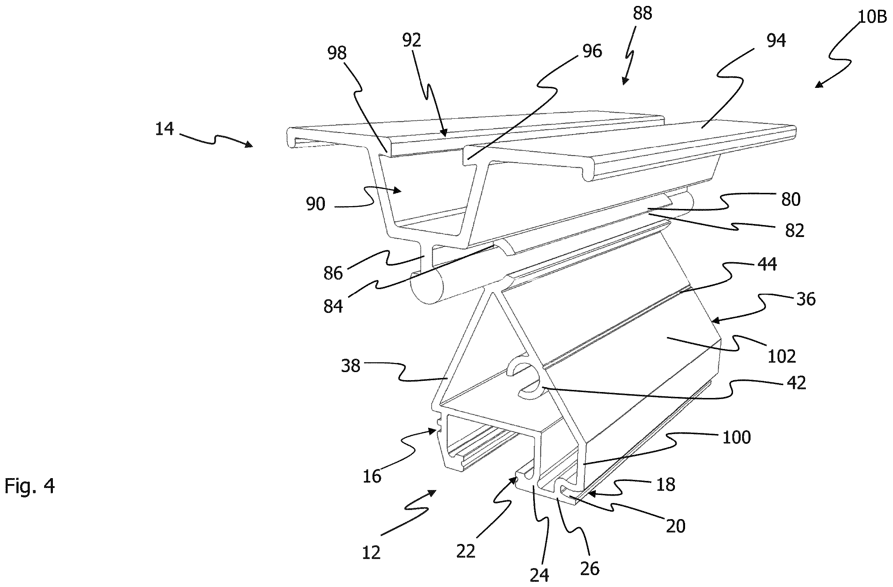

Figur 4 zeigt eine perspektivische Ansicht eines Tragelements 10B gemäß einer weiteren Ausführungsform. Das Trageelement 10B kann ein Modulauflager bilden, auf dem das Solarmodul aufliegen kann. Das Tragelement 10B ist als Profilelement ausgebildet. Das Tragelement 10B weist einen ersten Koppelabschnitt 12 und einen zweiten Koppelabschnitt 14 auf. Der erste Koppelabschnitt 12 ist als Hohlprofil ausgebildet. Der zweite Koppelabschnitt 14 ist gelenkig mit dem ersten Koppelabschnitt 12 verbunden. Der erste Koppelabschnitt 12 hat eine Achsaufnahme 80, die zur gelenkigen Verbindung mit dem zweiten Koppelabschnitt 14 dient. An dem zweiten Koppelabschnitt 14 ist ein Achsabschnitt 82 ausgebildet, der zumindest abschnittsweise in der Achsaufnahme 82 aufgenommen ist. Die Achsaufnahme 80 umgreift den Achsabschnitt 82. Die Achsaufnahme 80 erstreckt sich durch einen Schlitz 84 in einem Steg 86. Der Steg 86 verbindet den Achsabschnitt 82 mit einem Auflageabschnitt 88 des zweiten Koppelabschnitts 14.

Der Auflageabschnitt 88 hat eine Längsnut 90, der eine Nutöffnung 92 aufweist. In der in Figur 4 dargestellten Position des Tragelements 10B bzw. des zweiten Koppelabschnitts 14 ist die Längsnut 90 in entgegengesetzter Richtung zu der Längsnut 22 in dem Boden 26 geöffnet. Der Auflageabschnitt 88 hat eine Auflagefläche 94, auf der ein Solarmodul (nicht gezeigt) aufliegen kann. Die Nutöffnung 92 unterbricht die Auflagefläche 94. Die Längsnut 90 weist Halteränder 96 und 98 auf, die zwischen sich die Nutöffnung 92 festlegen, d.h. die in den Querschnitt die Längsnut 90 vorstehen. An den Halterändern 96 und 98 kann beispielsweise eine Modulklemme (nicht gezeigt) angreifen.

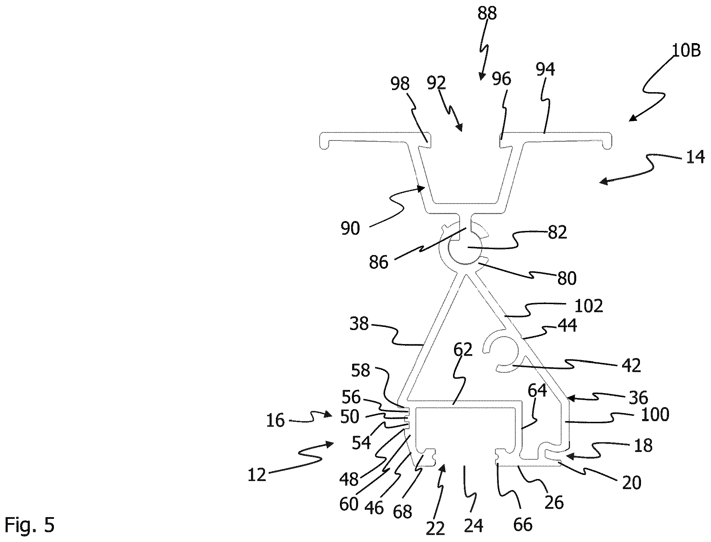

Der erste Koppelabschnitt 12 weist Seitenwände 36 und 38 auf. Die Seitenwände 36 und 38 nähern sich in Richtung der Achsaufnahme 80 aneinander an bzw. gehen in die Achsaufnahme 80 über. Die Seitenwand 36 weist einen Seitenwandabschnitt 100, an dem die Einhakaufnahme 18 mit ihrer Öffnung 10 ausgebildet ist, und einen Seitenwandabschnitt 102 auf, der sich abgewinkelt zu dem Seitenwandabschnitt 100 erstreckt. Der Seitenwandabschnitt 102 erstreckt sich schräg zwischen dem Seitenwandabschnitt 100 und der Achsaufnahme 80. An dem Seitenwandabschnitt 102 ist der Schraubkanal 42 angeordnet. Der Schraubkanal 42 ist somit im Inneren des Tragelements 10 vorgesehen. Die Position der Schraubkanal 42 wird durch die Rille 44 an der Außenseite des Seitenwandabschnitts 102 angezeigt. Figur 5 zeigt eine Vorderansicht des Tragelements 10B gemäß Figur 4. Das Tragelement 10B weist die Achsaufnahme 80 auf, in der der Achsabschnitt 82 des zweiten Koppelabschnitts 14 aufgenommen ist. Die Achsaufnahme 80 umgreift den Achsabschnitt 82.

Der erste Koppelabschnitt 12 weist die äußere Rastformation 16 auf. Die äußere Rastformation 16 ist identisch zu der mit Bezug auf die Figuren 1 bis 3 beschriebenen äußeren Rastformation 16 ausgebildet. Die voranstehenden Ausführungen zur äußeren Rastformation 16 gelten somit auch für die in den Figuren 4 und 5 gezeigte äußere Rastformation 16.

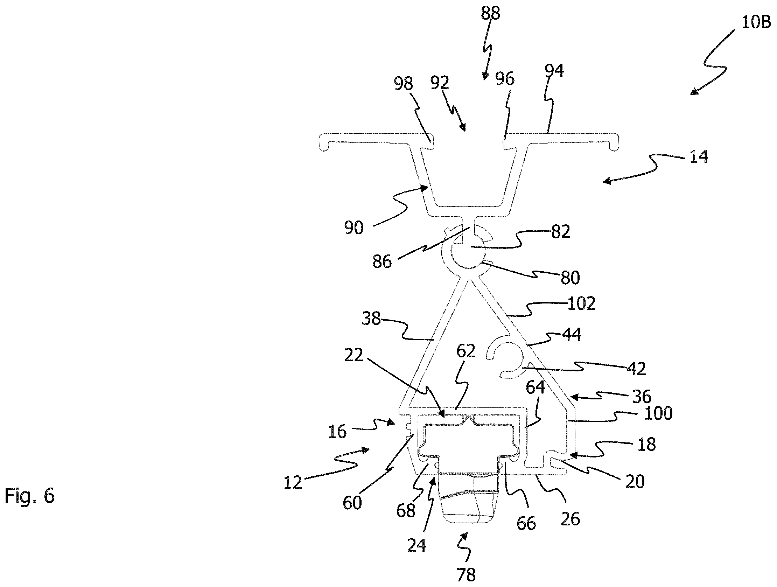

Figur 6 zeigt eine Ansicht des Tragelements 10B, die weitgehend der Vorderansicht gemäß Figur 5 entspricht. Wie bei der voranstehend beschriebenen Figur 3 bezüglich des Tragelements 10B wurde bei der Ansicht gemäß Figur 5 ein Verbindungselement 78 in die Längsnut 22 eingesetzt. Das Verbindungselement 78 ist drehfest in der Längsnut 22 aufgenommen. Das Verbindungselement 78 stützt sich an den Wänden 60, 64, dem Nutboden 62 und den Halterändern 66, 68 der Längsnut 22 ab. Das Verbindungselement 78 kann mit seinem aus der Nutöffnung 24 vorstehenden Abschnitt beispielsweise in eine korrespondierenden Längsnut einer Schiene (nicht gezeigt) eingesetzt werden. Durch eine Drehbewegung des Tragelements 10B und des darin aufgenommenen Verbindungselements 78 kann das Tragelement 10B über das Verbindungselement 78 mit der nicht gezeigten Schiene verbunden werden.

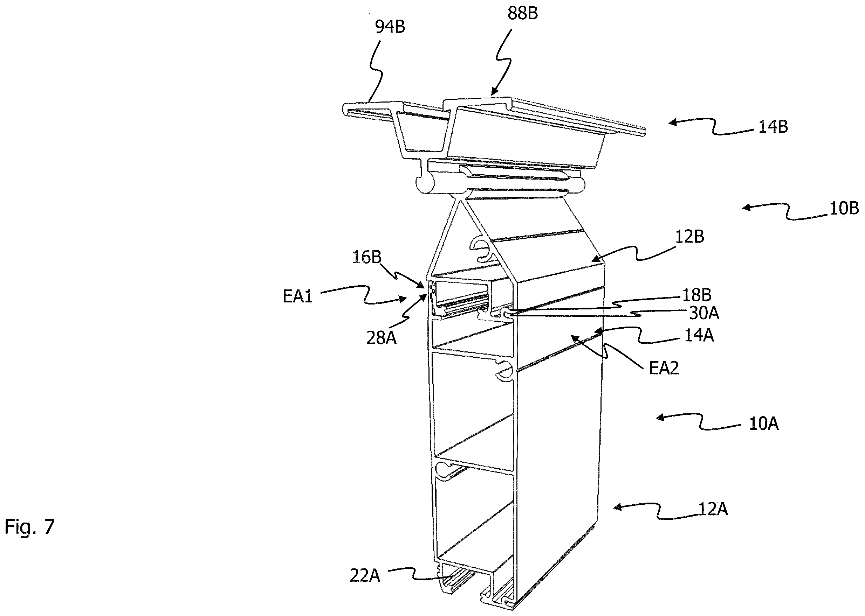

Figur 7 zeigt eine perspektivische Ansicht der beiden zusammengesetzten Tragelemente 10A und 10B. Das Tragelement 10A wurde mit Bezug auf die Figuren 1 bis 3 beschrieben. Das Tragelement 10B wurde mit Bezug auf die Figuren 4 bis 6 beschrieben. Die Tragelemente 10A und 10B sind über den zweiten Koppelabschnitt 14A des Tragelements 10A und den ersten Koppelabschnitt 12B des Tragelements 10B miteinander verbunden. Die Einhakaufnahme 18B des Tragelements 10B wurde mit dem Haken 30A des Tragelements 10A in Eingriff gebracht. Im Anschluss daran wurde das Tragelement 10B verschwenkt, sodass die innere Rastformation 28A des zweiten Koppelabschnitts 14A des Tragelements 10A mit der äußeren Rastformation 16B des Tragelements 10B verrastet werden konnte. Die beiden Tragelemente 10A und 10B konnten somit ohne Befestigungselemente miteinander verbunden werden. Die Längsnut 22A des ersten Koppelabschnitts 14A des Tragelements 10A kann beispielsweise zur Verbindung mit einer Basisschiene (nicht gezeigt) dienen. Der Auflageabschnitt 88B des Tragelements 10B kann mit einem Solarmodul (nicht gezeigt) eines Solarmoduls verbunden werden. Auf diese Weise können die Tragelemente 10A und 10B ein Solarmodul tragen und abstützen. Da der zweite Koppelabschnitt 14B des Tragelements 10B relativ zu dem ersten Koppelabschnitt 12B verschwenkbar ist, kann mit über das Tragelement 10B auch der Winkel des Solarmoduls eingestellt werden.

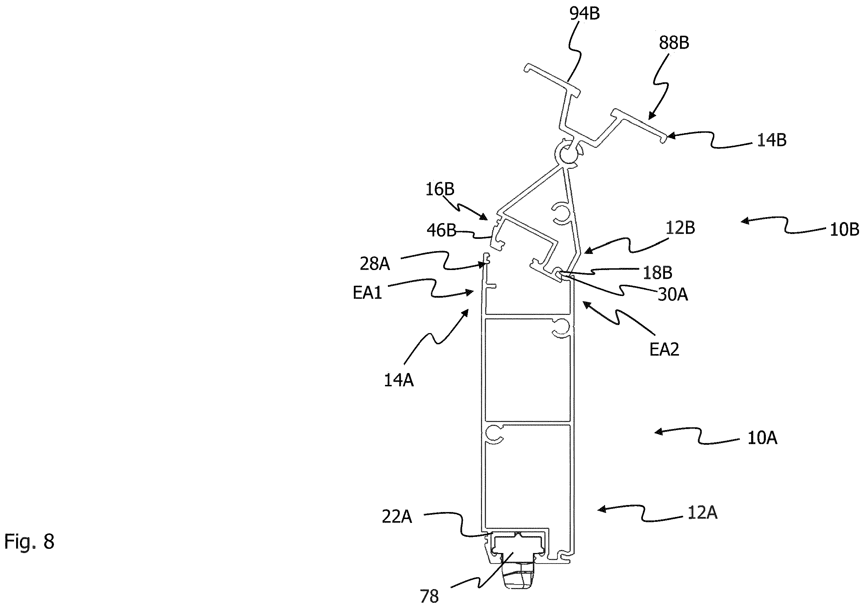

Figur 8 zeigt eine Vorderansicht der Tragelemente 10A und 10B vor der Verrastung. Dies ist daran zu erkennen, dass sich das Tragelement 10B abgewinkelt zu dem Tragelement 10A erstreckt und die Rastformationen 16B und 28A noch nicht miteinander in Eingriff stehen. Die Einhakaufnahme 18B des Tragelements 10B wurde in den Haken 30A des Tragelements 10A eingehängt. Da sowohl der Haken 30A als auch die Einhakaufnahme 18B gekrümmt ausgebildet sind, kann das Tragelement 10B relativ zu dem Tragelement 10A verschwenkt werden. Durch die Schwenkbewegung können die äußere Rastformation 16B des Tragelements 10B und die innere Rastformation 28A des Tragelements 10A miteinander verrastet werden. Sobald die Einführschräge 46B der Rastformation 16B mit dem nach innen gekrümmten Seitenwandabschnitt EA1 bzw. mit der Rastformation 28A in Kontakt kommt, wird der gekrümmte Seitenwandabschnitt EA1 nach außen gedrückt. Wenn die innere Rastformation 28A des Tragelements 10A mit der äußeren Rastformation 16B des korrespondierenden Tragelements 10B einen Formschluss herstellen kann, sind die beiden Tragelemente 10A, 10B miteinander verrastet. Diese Verbindung kann auch als Klickverbindung bezeichnet werden, da der nach innen gekrümmt Seitenwandabschnitt EA1 bei der Herstellung des Formschlusses nach innen "schnappt".

In der Längsnut 22A des ersten Koppelabschnitts 12A des Tragelements 10A ist das Verbindungselement 78 aufgenommen. Über das Verbindungselement 78 kann eine Verbindung mit einer Schiene (nicht gezeigt) hergestellt werden.

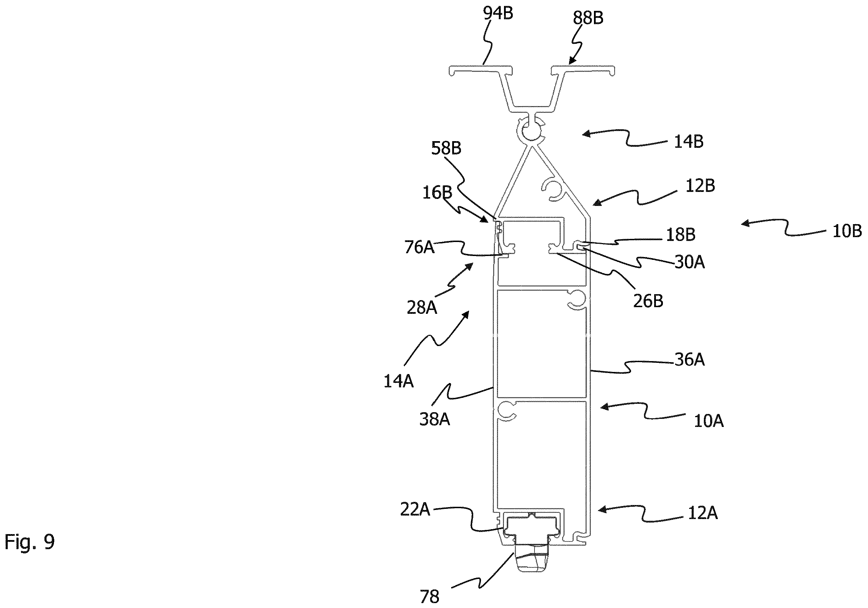

Figur 9 zeigt eine Vorderansicht der Tragelemente 10A und 10B im miteinander verrasteten Zustand. In Figur 9 ist erkennbar, dass sich das Tragelement 10 B mit seinem Boden 26B an dem Abstützabschnitt 76A abstützt. Ferner stützt sich das Tragelement 10 B über den Absatz 58B an der Stirnfläche der Seitenwand 38A des Tragelements 10A.

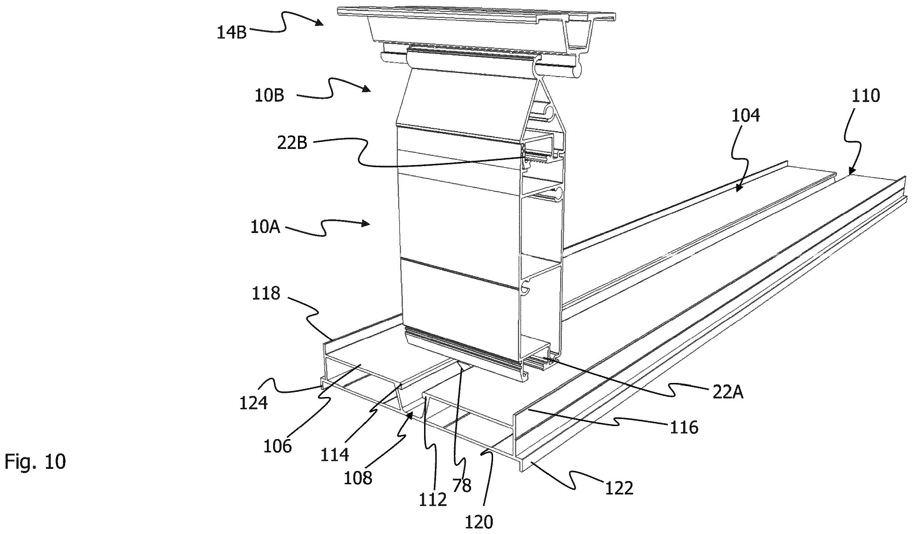

Figur 10 zeigt eine perspektivische Ansicht, in der die von den Tragelementen 10A und 10B gebildeten Baugruppe mit einer Basisschiene 104 verbunden wurde. Die Basisschiene 104 weist eine Basisfläche 106 und eine Längsnut 108 auf. Die Längsnut 108 weist eine Nutöffnung 110 auf. Die Nutöffnung 110 wird von Halteränder 112, 114 der Längsnut 108 begrenzt. An der Basisfläche 106 sind Haltestege 116 und 118 vorgesehen. Die Haltestege 116 und 118 erstrecken sich abgewinkelt zu der Basisfläche 106. Die Haltestege 116 und 118 dienen zum Halten von Ballastkörpern an der Basisschiene 104.

An der Unterseite 120 der Basisschiene 104 sind Haltestege 122, 124 vorgesehen. Die Haltestege 122, 124 können die Bautenschutzmatten (nicht gezeigt) in ihrer Position an der Basisschiene halten. Die Bautenschutzmatten können sich zwischen den Haltestegen 122, 124 erstrecken. Die Bautenschutzmatten dienen zum Schutz des Dachs und insbesondere zum Schutz der Dachabdichtung.

Die von den Tragelementen 10A und 10B gebildeten Baugruppe ist über ein Verbindungselement 78 (siehe Figuren 3, 6, 8 und 9) mit der Basisschiene 104 verbunden. Zur Verbindung mit der Basisschiene 104 kann zunächst nur das Tragelement 10A, in dessen Längsnut 22A das Verbindungselement 78 eingesetzt wurde, mit der Basisschiene 104 verbunden werden. Dazu wird das Tragelement 10A parallel zu der Längsnut 108 ausgerichtet. In dieser Position kann das Verbindungselement 78 in der Längsnut 108 der Basisschiene eingesetzt werden. Dann wird das Tragelement 10A und damit auch das Verbindungselement 78 um in etwa 90° in die in Figur 10 gezeigte Position verdreht. Dadurch wird eine Verbindung über das Verbindungselement 78 zwischen dem Tragelement 10A und der Basisschiene 104 hergestellt, da das Verbindungselement 78 in dieser Position die Haltränder 112, 114 der Längsnut 108 hintergreift. Im Anschluss daran wird das Tragelement 10B mit dem Tragelement 10A verrastet, sodass der in Figur 10 gezeigte Zustand erreicht wird. Es ist jedoch auch denkbar, zunächst die Tragelemente 10A und 10B miteinander zu verbinden, bevor das Verbindungselement 78 in der Längsnut 108 eingesetzt und die von den Tragelementen 10A, 10B und dem Verbindungselement 78 gebildete Baugruppe um 90° verdreht wird.

Wie in Figur 6 gezeigt ist, kann auch das Tragelement 10B ein Verbindungselement 78 in seiner Längsnut 22B aufnehmen. Dadurch kann das Tragelement 10B direkt über das Verbindungselement 78 mit der Basisschiene 104 verbunden werden. Dies erfolgt ebenfalls durch eine Drehbewegung um 90°.

Die in Figur 10 gezeigte Baugruppe, die von den Tragelementen 10A, 10B und dem Verbindungselement 78 gebildet wird, kann zusammen mit dem in Figur 6 gezeigten Tragelement 10B und dem Verbindungselement 78 gemeinsam und voneinander in Längsrichtung der Basisschiene 104 beabstandet an der Basisschiene 104 angebracht werden, um ein Solarmodul tragen zu können. Über den verschwenkbaren Koppelabschnitt 14B kann der Winkel des Solarmoduls eingestellt werden.

Wie voranstehend bereits beschrieben wurde, können auch mehrere der Tragelemente 10A miteinander verbunden werden. Ein Tragelement 10B kann in diesem Fall den oberen Abschluss der Baugruppe bilden.

Die Tragelemente 10A und 10B können bausteinartig zusammengesetzt werden, um die Höhe und den Winkel des Solarmoduls einstellen zu können. Die Tragelemente 10A und 10B sind über ihre Koppelabschnitte variabel miteinander verbindbar, sodass die Höhe über dem Flachdach und der Winkel des Solarmoduls flexibel eingestellt werden können. Die Befestigung der Tragelemente 10A, 10B kann unabhängig davon, ob mehrere Tragelemente 10A miteinander oder ein Tragelement 10A mit einem Tragelement 10B verbunden werden soll, ohne Befestigungsmittel erfolgen. Die Verbindung erfolgt allein durch die Verrastung der entsprechenden Tragelemente 10A, 10B über die beschriebene Schwenkbewegung.

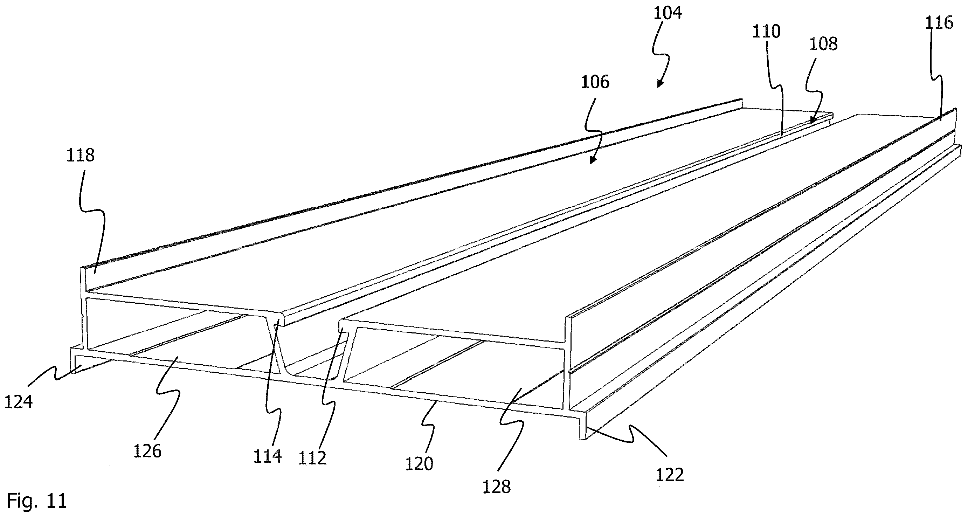

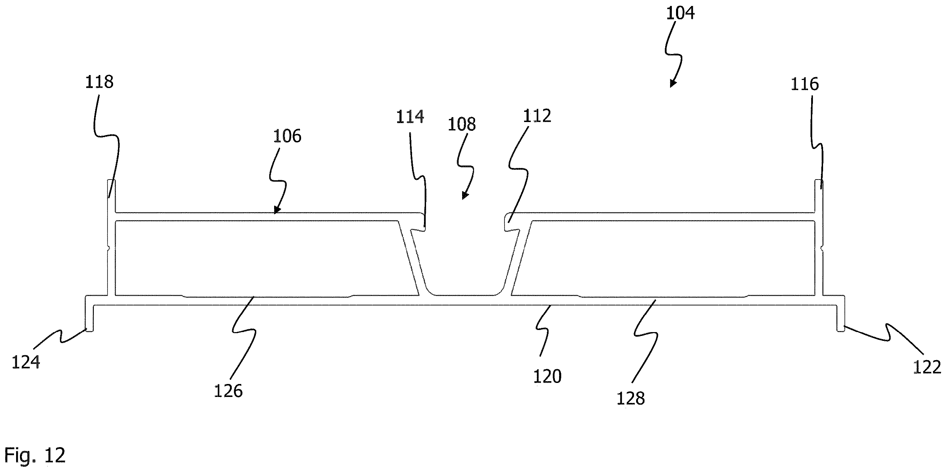

Die Figuren 11 und 12 zeigen Ansichten einer Basisschiene 104. Die Basisschiene 104 hat eine Basisfläche 106 und eine Längsnut 108. Die Basisfläche 106 wird durch die Haltestege 116 und 118 begrenzt. Die Basisfläche 106 kann als Auflagefläche für Ballastkörper (nicht gezeigt) dienen. Die Haltestege 116 und 118 können die Ballastkörper an der Basisschiene 104 halten. Zudem weist die Basisschiene 104 Aufnahmen 126 und 128 auf, in denen ein Verbindungsprofil bzw. eine Verbindungschiene zumindest abschnittsweise aufgenommen werden kann. Die Aufnahmen 126 und 128 sind seitlich neben der Längsnut 108 angeordnet.

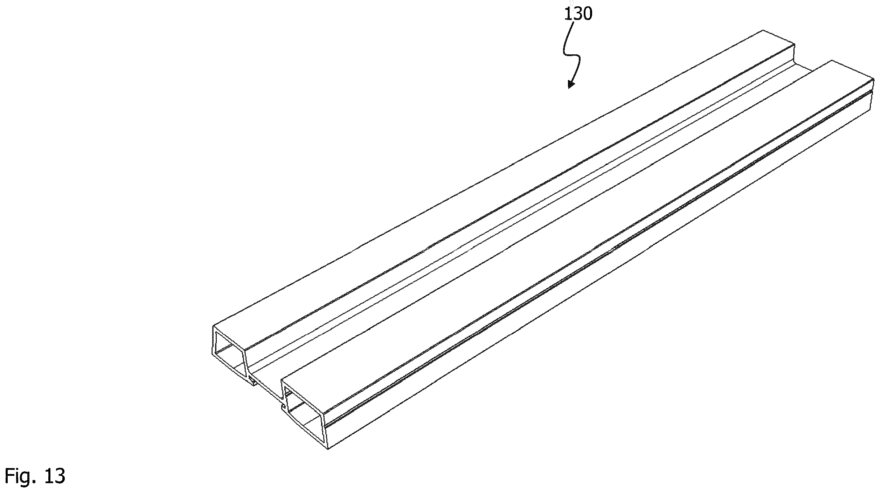

Figur 13 zeigt eine perspektivische Ansicht eines Verbindungsprofils 130, das beispielsweise in einer der Aufnahmen 126 oder 128 aufgenommen werden kann. Das Verbindungsprofil 130 ist schienenförmig ausgebildet. Das Verbindungsprofil 130 kann in eine der Aufnahmen 126 oder 128 eingeschoben werden.

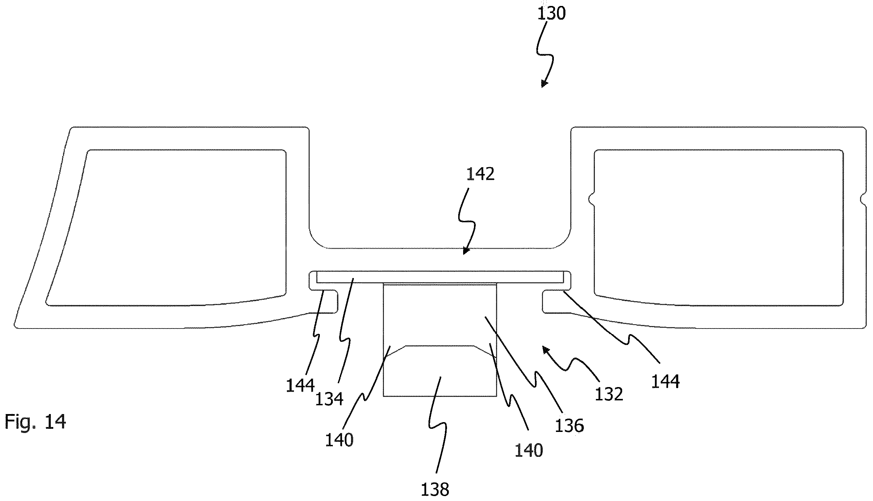

Figur 14 zeigt eine Vorderansicht des Verbindungsprofils 130. das Verbindungsprofil 130 ist korrespondierend zu den Aufnahmen 126, 128 der Basisschiene 104 ausgebildet, damit es in den Aufnahmen 126 und 128 der Basisschiene 104 aufgenommen werden kann. Die Form und der Querschnitt des Verbindungsprofils 130 sind an die Aufnahmen 126 und 128 der Basisschiene 104 angepasst.

Das Verbindungsprofil 130 hat ein Haltelement 132. Das Halteelement 132 ist in dem gezeigten Ausführungsbeispiel an der Unterseite des Verbindungsprofils 130 angebracht. Das Halteelement 132 hat einen Befestigungsabschnitt 134. Der Befestigungsabschnitt 134 ist plattenförmig ausgebildet. Das Haltelement 132 weist ferner eine Kralle 136 und ein Anschlagelement 138 auf. Die Kralle 136 hat zwei Krallenspitzen 140, die an der Basisschiene 104 angreifen können, um das Verbindungsprofil 130 an der Basisschiene 104 zu halten. Die Kralle 136 und das Anschlagelement 138 erstrecken sich abgewinkelt zu dem Befestigungsabschnitt 134.

Das Verbindungsprofil 130 hat einen Aufnahmebereich 142, in dem der Befestigungsabschnitt 134 des Haltelements 132 aufgenommen ist. Der Aufnahmebereich 142 wird von zwei Vorsprüngen 144 definiert, die sich aufeinander zu erstrecken. Dadurch wird der Befestigungsabschnitt 134 zumindest teilweise umschlossen.

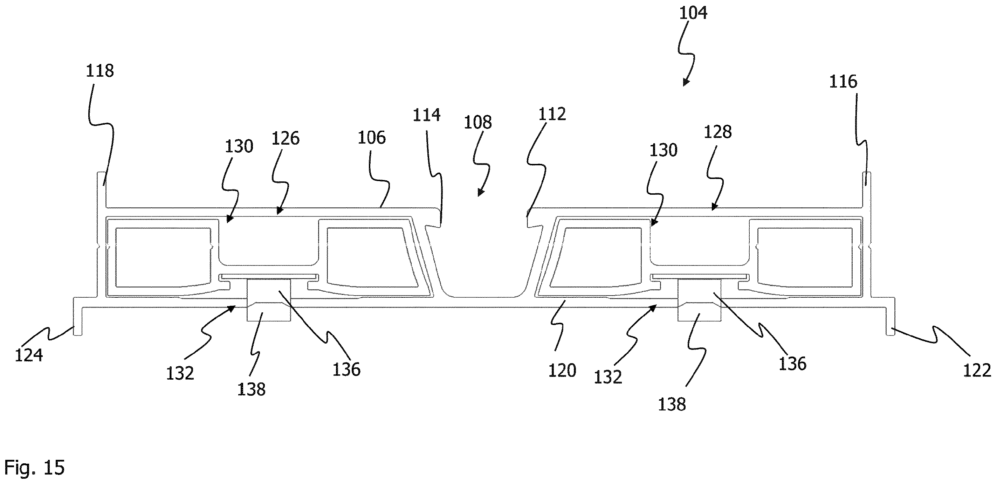

Figur 15 zeigt eine Ansicht einer Basisschiene 104, die mit zwei Verbindungsprofilen 130 verbunden wurde. Die Verbindungsprofile 130 sind in den Aufnahmen 126 und 128 der Basisschiene 104 aufgenommen worden. Das Anschlagelement 138 der Verbindungelemente 130 liegt an der Basisschiene 104 an, so dass die Verbindungsprofile 130 nicht mehr weiter in die Aufnahmen 126 und 128 eingeschoben werden können.

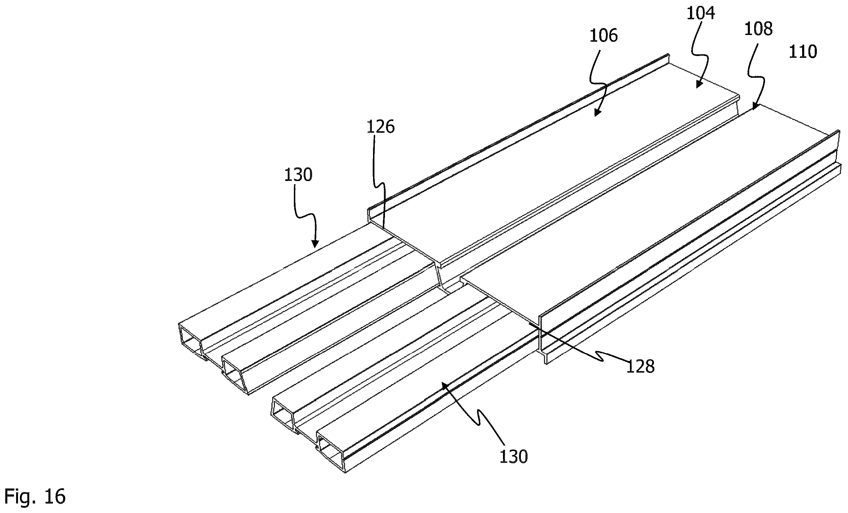

Figur 16 zeigt eine perspektive Ansicht einer Basisschiene 104, in die zwei Verbindungsprofile 130 eingesteckt wurden. Die Verbindungsprofile 130 stehen aus den Aufnahmen 126 und 128 vor.

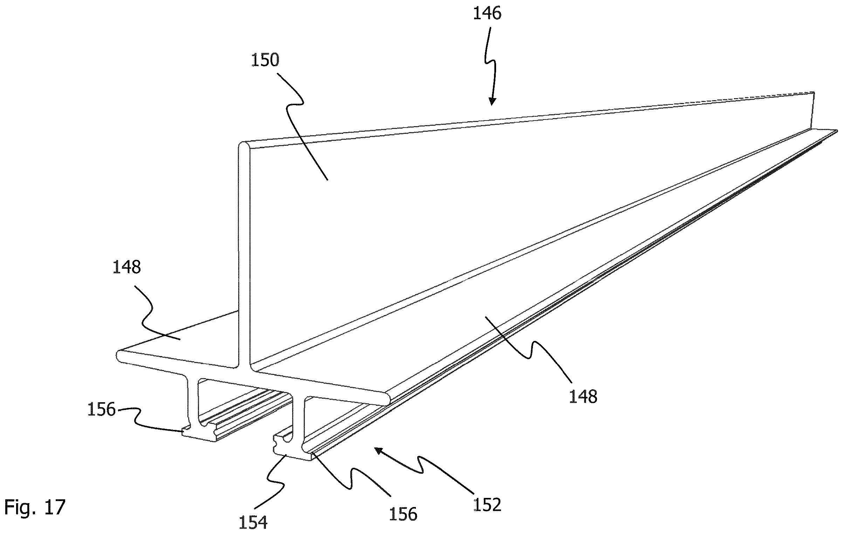

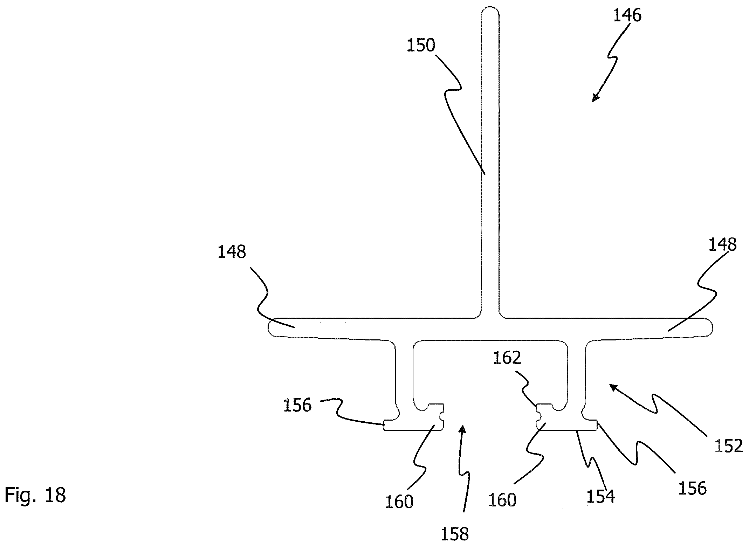

Die Figuren 17 und 18 zeigen Ansichten einer Ballastschiene 146, auf der Ballastkörper (nicht gezeigt) aufliegen können. Die Ballastschiene 146 hat zwei Auflageabschnitte 148 für Ballastkörper, die durch einen Anlageabschnitt 150 voneinander getrennt werden. An der Unterseite der Auflageabschnitte 148 ist ein Aufnahmeabschnitt 152 für ein Verbindungsprofil (nicht) ausgebildet. Der Aufnahmeabschnitt 152 hat eine Bodenfläche 154, mit der die Ballastschiene 146 auf einer weiteren Komponente aufliegen kann. Der Aufnahmeabschnitt 152 hat seitliche Vorsprünge 156, die sich von dem Aufnahmeabschnitt 152 in entgegengesetzte Richtungen erstrecken. Der Aufnahmeabschnitt 152 hat eine Längsnut 158, die Halteränder 160 aufweist. Die Halteränder 160 legen zwischen sich die Nutöffnung 162 fest.

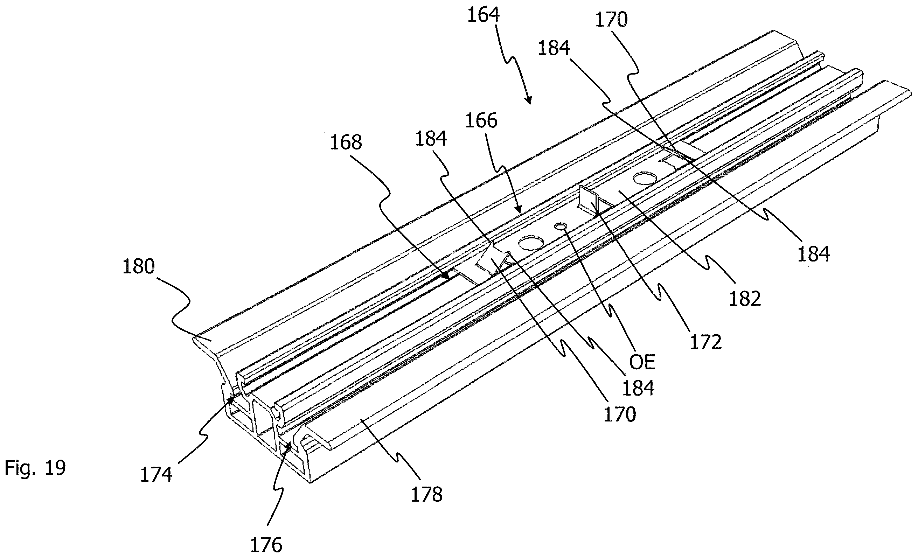

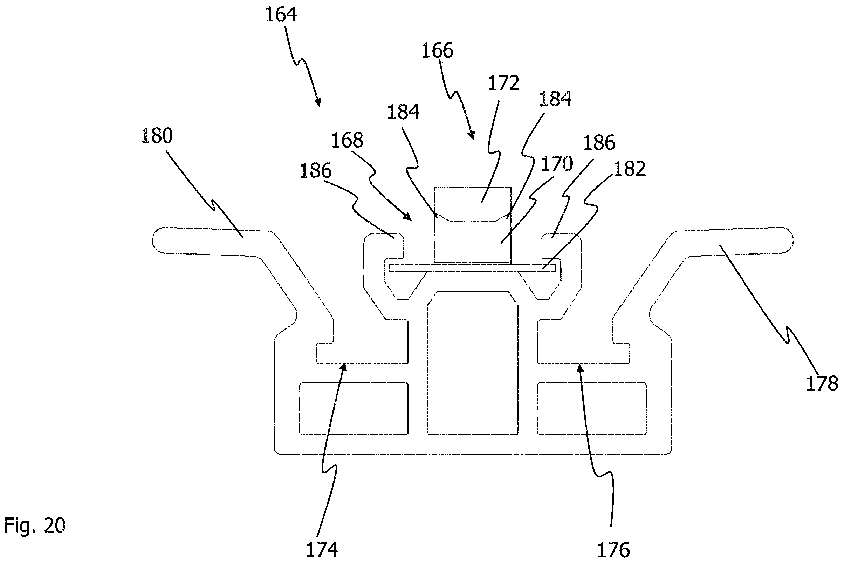

Die Figuren 19 und 20 zeigen Ansichten eines Verbindungsprofils 164, das beispielsweise zur Verbindung von zwei der in den Figuren 17 und 18 gezeigten Ballastschienen 146 ausgebildet ist. Das Verbindungsprofil 164 hat ein Haltelement 166, das in einer an dem Verbindungsprofil 164 ausgebildeten Aufnahme 168 aufgenommen und befestigt ist. Das Haltelement 166 hat zwei Krallen 170 und ein Anschlagelement 172. Das Anschlagelement 172 ist zwischen den Krallen 170 angeordnet. Die Krallen 170 erstrecken sich abgewinkelt in Richtung des Anschlagelements 172.

Das Verbindungsprofil 164 hat zwei Aufnahmebahnen 174 und 176 für den Aufnahmeabschnitt 152 der Ballastschiene 146. Die Aufnahmebahnen 174 und 176 sind seitlich neben der Aufnahme 168 für das Halteelement 166 ausgebildet. Das Verbindungsprofil 164 hat ferner Stützabschnitte 178 und 180, die zur Abstützung der Auflageabschnitte 148 dienen können. Die Stützabschnitte 178 und 180 erstrecken sich ausgehend von den Aufnahmebahnen 174 und 176 seitlich nach außen.

Das Halteelement 166 hat einen Befestigungsabschnitt 182. Der Befestigungsabschnitt 182 ist plattenförmig ausgebildet. Die Kralle 170 hat zwei Krallenspitzen 184, die an der Ballastschiene 146 angreifen können, um das Verbindungsprofil 164 an der Ballastschiene 146 zu halten. Die Aufnahme 168 für den Befestigungsabschnitt 182 des Haltelements 166 wird von zwei Vorsprüngen 186 definiert, die sich aufeinander zu erstrecken. Der Befestigungsabschnitt 182 weist im Bereich OE eine Umformung auf, um eine Verbindung mit dem Verbindungsprofil 164 herzustellen. Durch diese Umformung kann das Halteelement 166 an dem Verbindungsprofil 164 gehalten werden.

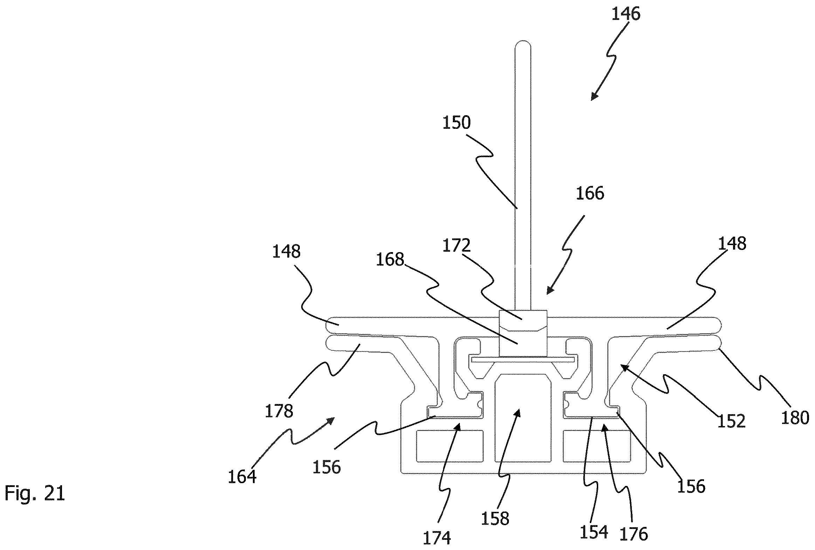

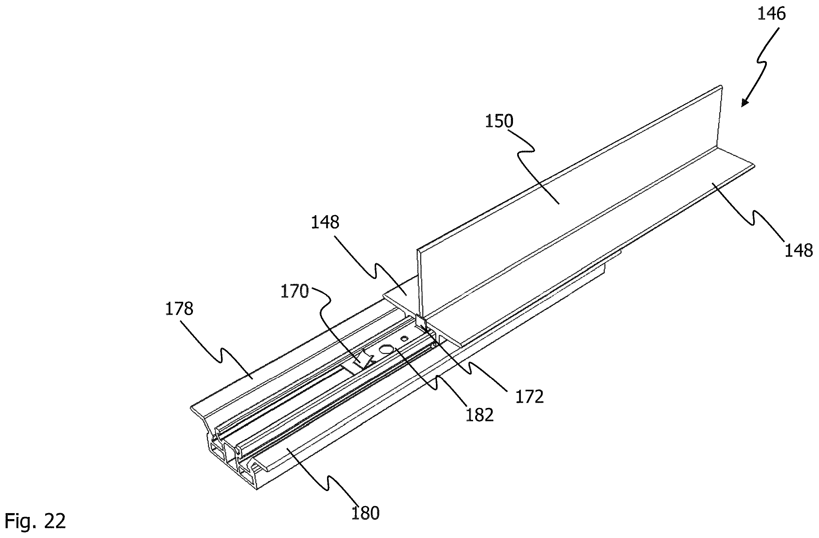

Die Figuren 21 und 22 zeigen Ansichten der Ballastschiene 146 und des Verbindungsprofils 164 im verbundenen Zustand. Das Verbindungsprofil 164 wurde auf die Ballastschiene 146 aufgesteckt. Die Längsnut 158 nimmt den Aufnahmeabschnitt 168 des Verbindungsprofils 164 auf. Die Aufnahmebahnen 174 und 176 können den Aufnahmeabschnitt 152 der Ballastschiene 146 aufnehmen und führen. Die Stützabschnitte 178 und 180 können die Auflageabschnitte 148 abstützen.

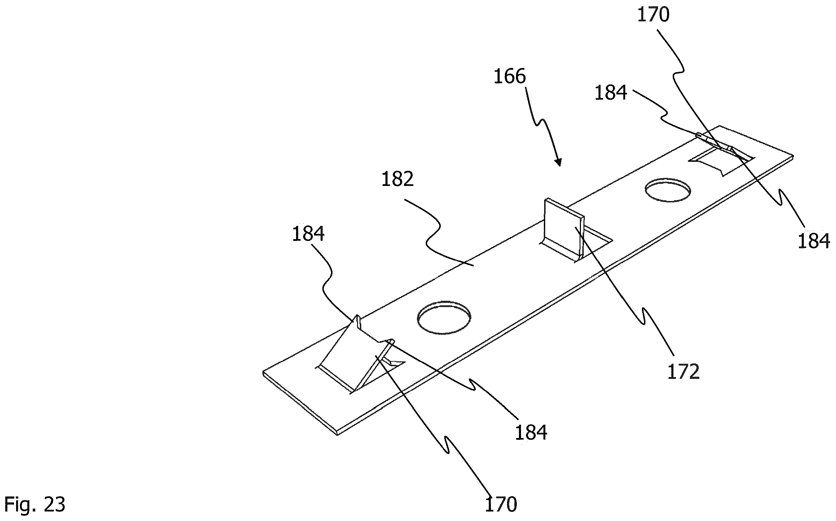

Figur 23 zeigt eine Einzelteildarstellung eines Haltelements 166. Das Haltelement 166 hat zwei Krallen 170 und ein Anschlagelement 172. Das Anschlagelement 172 ist zwischen den Krallen 170 angeordnet. Die Krallen 170 erstrecken sich abgewinkelt in Richtung des Anschlagelements 172. Das Halteelement 166 hat einen Befestigungsabschnitt 182. Der Befestigungsabschnitt 182 ist plattenförmig ausgebildet. Die Krallen 170 haben jeweils zwei Krallenspitzen 184, die an der Ballastschiene 146 angreifen können, um das Verbindungsprofil 164 an der Ballastschiene 146 zu halten. Das Halteelement 132 gemäß Figur 14 und das Halteelement 166 können identisch ausgebildet sein.

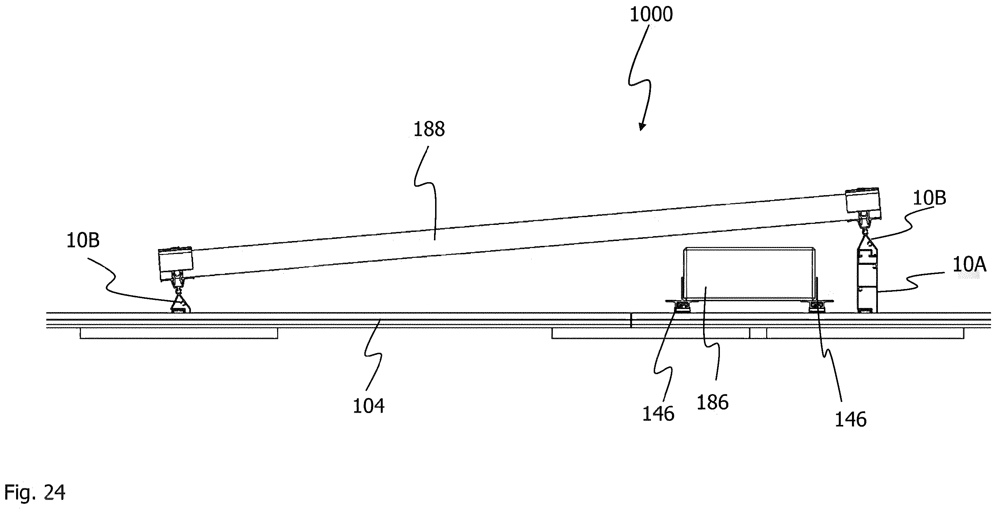

Figur 24 zeigt eine Seitenansicht eines Tragsystems 1000. Das Tragsystem 1000 umfasst die Tragelemente 10A und 10B, eine Basisschiene 104, Ballastschienen 146, Ballastkörper 186 und einem Solarmodul 188. Die Ballastschienen 146 tragen die Ballastkörper 186. Der Solarmodul 188 ist mit den Tragelementen 10B verbunden, die aufgrund ihrer Gelenkigkeit eine parallele Ausrichtung ihrer Auflagefläche zu dem Solarmodul 188 zulassen (siehe Figuren 4 bis 6). Das in Figur 14 rechte Tragelemente 10B ist mit einem Tragelement 10A gekoppelt, um das rechte Ende des Solarmoduls 188 zu erhöhen und einen vorbestimmten Winkel des Solarmoduls 188 einzustellen. In Figur 24 wird über die Tragelemente 10A und 10B ein Winkel des Solarmoduls von 5° eingestellt.

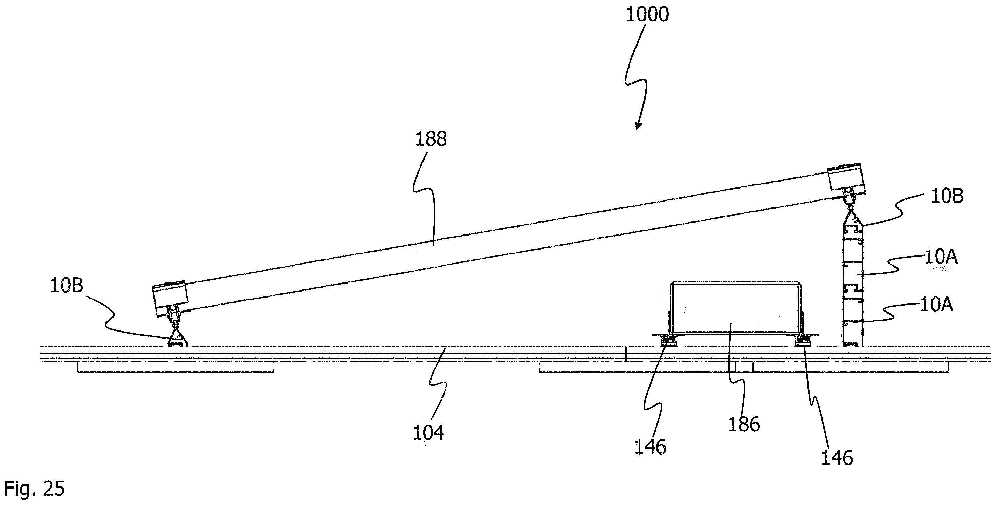

In Figur 25 wurden zwei Tragelemente 10A und ein Tragelement 10B miteinander verbunden. Dadurch wurde das rechte Ende des Solarmoduls 188 weiter erhöht. In Figur 25 wird über die Tragelemente 10A und 10B ein Winkel des Solarmoduls von 10° eingestellt.

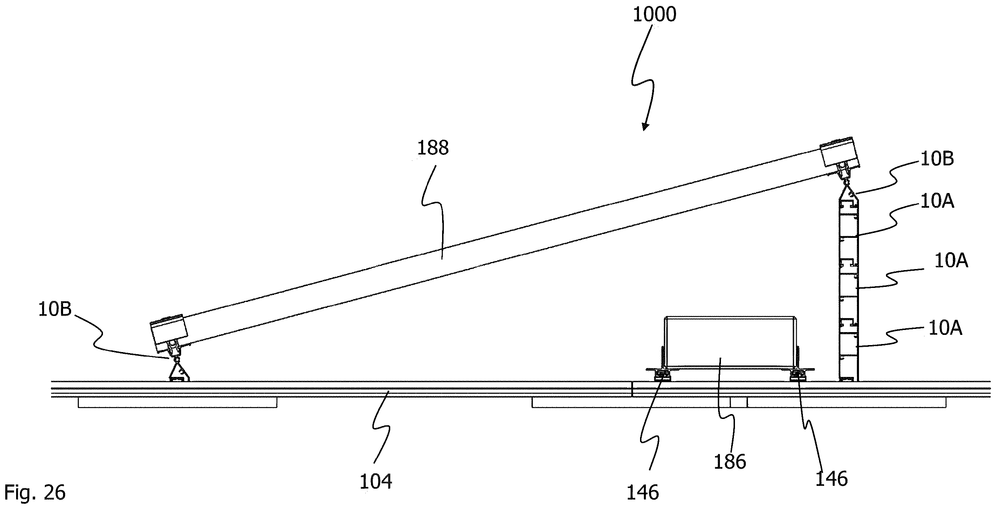

In Figur 26 sind drei Tragelemente 10A und ein Tragelement 10B miteinander verbunden. Dadurch wurde das rechte Ende des Solarmoduls 188 weiter erhöht. In Figur 26 wird über die Tragelemente 10A und 10B ein Winkel des Solarmoduls von 15° eingestellt.

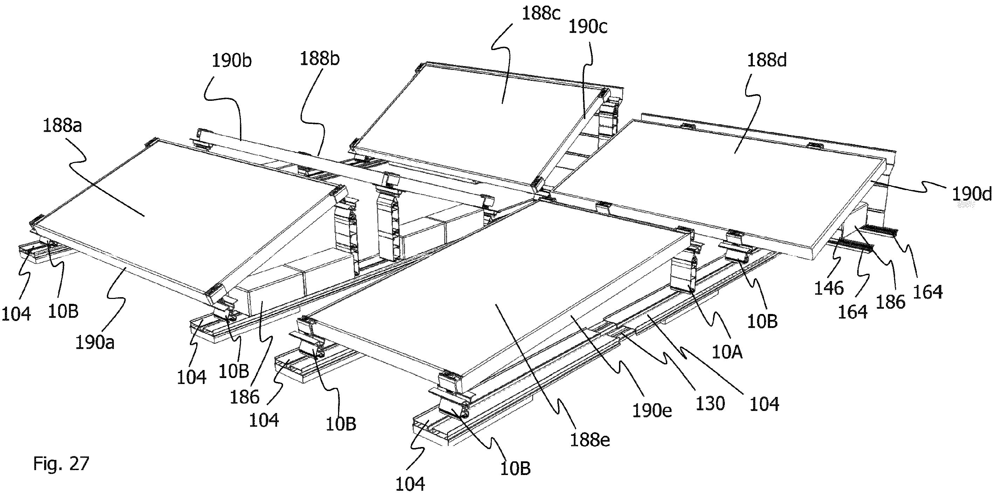

Figur 27 zeigt verschiedene Anordnungen von Solarmodulen 188a, 188b, 188c, 188d, 188e, die durch das Tragsystem gemäß der Erfindung ermöglicht werden. In dem dargestellten Ausführungsbeispiel sind gerahmte Solarmodule 188a, 188b, 188c, 188d, 188e gezeigt, die jeweils einen Rahmen 190a, 190b, 190c, 190d und 190e aufweisen. Das Tragsystem gemäß der Erfindung kann jedoch auch mit rahmenlosen Solarmodulen (nicht gezeigt) verwendet werden. Die Solarmodule 188a, 188b, 188c, 188d sind im Querformat (landscape) bzw. horizontal angeordnet. Das Solarmodul 188e ist im Hochformat (portrait) bzw. vertikal angeordnet. Wie an dem Solarmodul 188d erkennbar ist, können die Tragelemente 10A, 10B auch derart angeordnet sein, dass der Solarmodulrahmen 190d des Solarmoduls 188d mit einem zentralen Bereich auf den Tragelementen 10B aufliegt und nicht mit seinen Ecken.

Wie in Figur 27 erkennbar ist, können durch die bausteinartig zusammensetzbaren Tragelemente 10A und 10B verschiedene Winkel und verschiedene Höhen der Solarmodule 188 eingestellt werden. Dabei ist hervorzuheben, dass für die Einstellung der Höhe und des Winkels der Solarmodule 188a, 188b, 188c, 188d, 188e über die Tragelemente 10A und 10B keine zusätzlichen Befestigungsmittel benötigt werden.

In Figur 27 sind zwei Basisschienen 104 über Verbindungsprofile 130 miteinander verbunden. Dazu wird die Verbindungsprofile 130 in die beiden Basisschienen 104 eingesteckt. Die Basisschienen 104 können als Auflage für die Ballastkörper 186 dienen. Jeweils zwei Ballastschienen 146 tragen die Ballastkörper 186. An den Ballastschienen 146 sind in Figur 27 die Verbindungsprofile 164 gezeigt.

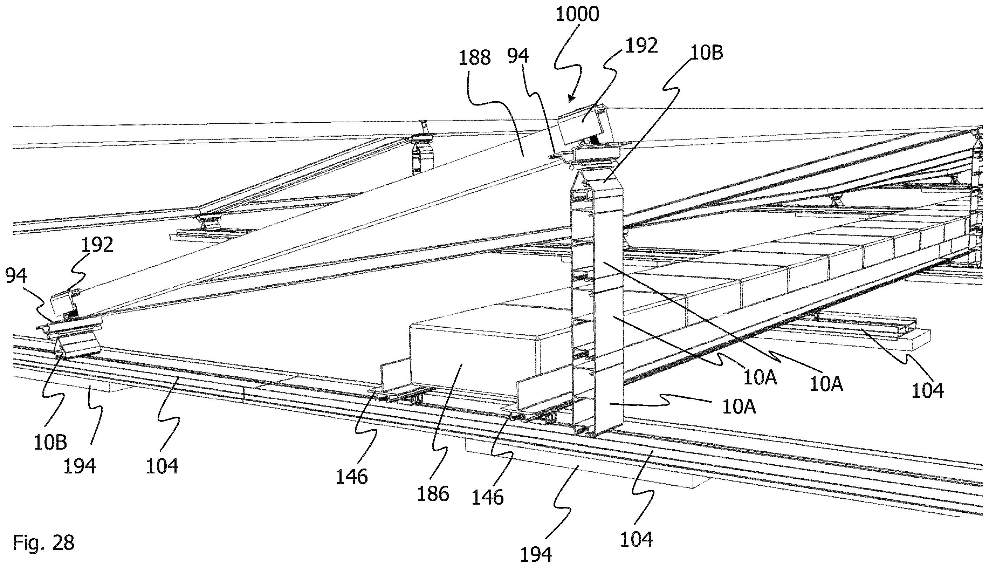

Figur 28 zeigt eine perspektivische Ansicht eines Tragsystems 1000. Das Tragsystem 1000 gemäß Figur 28 weist die Basisschienen 104, die Ballastschienen 146 und die Tragelemente 10A und 10B auf. Jeweils zwei Ballastschienen 146 tragen einen Ballastkörper 186. Die Basisschienen 104 sind miteinander über ein nicht gezeigtes Verbindungsprofil verbunden. An diesen beiden Basisschienen 104 sind die Tragprofile 10A und 10B angebracht. Gemäß Figur 28 sind drei Tragelemente 10A miteinander verbunden. Die Anordnung von drei Tragelementen 10A ist mit einem Tragelement 10B verbunden. Die Tragelemente 10B stehen mit dem Solarmodul 188 in Kontakt. Das Solarmodul 188 liegt auf den Auflageflächen 94 der Tragelemente 10B auf. Durch die gelenkigen Tragelemente 10B wird erreicht, dass das Solarmodul 188 flächig auf der Auflagefläche 94 der Tragelemente 10B aufliegen kann. Das Solarmodul 188 wird über Modulklemmen 192 an dem Tragsystem 1000 gehalten.

In Figur 28 sind ferner Bautenschutzmatten 194 gezeigt, die sich unterhalb der Basisschienen 104 erstrecken. Die Bautenschutzmatten 194 dienen zum Schutz des Dachs und insbesondere zum Schutz der Abdichtung des Dachs, so dass diese nicht beschädigt werden kann.

## Patentansprüche

1. Tragelement (10A, 10B) für ein Tragsystem (1000) zum Tragen eines Solarmoduls,
wobei das Trageelement (10) wenigstens einen ersten Koppelabschnitt (12) und wenigstens einen zweiten Koppelabschnitt (14) aufweist,
wobei der wenigstens eine erste Koppelabschnitt (12) wenigstens eine Einhakaufnahme (18) und wenigstens eine Rastformation (16) aufweist, wobei die wenigstens eine Rastformation (16) an einer Außenseite und/oder einer Innenseite des Tragelements (10) ausgebildet ist,
wobei der wenigstens eine erste Koppelabschnitt eine Längsnut (22) zur Aufnahme wenigstens eines Verbindungselements (78) aufweist, wobei die wenigstens eine Längsnut (22) zwischen der wenigstens einen Rastformation (16) und der wenigstens einen Einhakaufnahme (18) angeordnet ist,
wobei der erste Koppelabschnitt (12) derart ausgebildet ist, dass er sowohl mit einem korrespondierenden Tragelement (10A, 10B) als auch mit einer Basisschiene (104) verbindbar ist.

2. Tragelement (10A, 10B) nach Anspruch 1,
wobei die wenigstens eine Längsnut (22) wenigstens eine Nutöffnung (24) aufweist, die sich zwischen der Einhakaufnahme (18) und der wenigstens einen Rastformation (16) erstreckt.

3. Tragelement (10A, 10B) nach einem der Ansprüche 1 oder 2,
wobei die wenigstens eine Rastformation (16) an der Außenseite einer Wand (60) der wenigstens einen Längsnut (22) ausgebildet ist,
und/oder wobei die wenigstens eine Rastformation wenigstens einen Rastvorsprung (50) und/oder wenigstens eine Rastnase (48) aufweist, die sich nach außen oder innen erstrecken.

4. Tragelement (10A, 10B) nach einem der Ansprüche 1 bis 3,
wobei die wenigstens eine Rastformation (16), die wenigstens eine Einhakaufnahme (18) und die wenigstens eine Längsnut (22) gemeinsam an einem Endabschnitt des Tragelements (10A, 10b) ausgebildet sind.

5. Tragelement (10A) nach einem der Ansprüche 1 bis 4,
wobei der zweite Koppelabschnitt (14) wenigstens eine Rastformation (28) aufweist,
die an einer Außenseite oder an einer Innenseite des wenigstens einen Tragelements (10A) ausgebildet ist,
und/oder wobei der wenigstens eine zweite Koppelabschnitt (14) wenigstens einen nach innen gerichteten Haken (30) aufweist.

6. Tragelement (10A) nach Anspruch 5,
wobei die wenigstens eine Rastformation (28) wenigstens einen nach innen gerichteten Rastvorsprung (70, 72) aufweist.

7. Trageelement (10A) nach einem der Ansprüche 1 bis 6,
wobei der erste Koppelabschnitt (12) oder der zweite Koppelabschnitt (14) wenigstens einen gekrümmten Seitenwandabschnitt (EA1, EA2) aufweist.

8. Tragelement (10B) nach einem der Ansprüche 1 bis 3,
wobei der erste Koppelabschnitt (12) und der zweite Koppelabschnitt (14) gelenkig miteinander verbunden sind.

9. Tragelement (10B) nach Anspruch 8,
wobei der erste Koppelabschnitt (12) oder der zweite Koppelabschnitt (14) wenigstens eine Achsaufnahme (80) aufweist, wobei der jeweils andere erste oder zweite Koppelabschnitt (12, 14) wenigstens einen Achsabschnitt (82) hat, der in der wenigstens einen Achsaufnahme (80) aufgenommen ist,
und/oder wobei der zweite Koppelabschnitt (14) eine Auflagefläche (94) zur Auflage eines Solarmoduls (188) aufweist, wobei die gelenkige Verbindung zwischen dem ersten Koppelabschnitt (12) und dem zweiten Koppelabschnitt (14) eine flächige Auflage des Solarmoduls (188) auf der Auflagefläche (94) zulässt.

10. Tragsystem (1000) zur Anbringung eines Solarmoduls an einem Dach, insbesondere an einem Flachdach, wobei das Tragsystem (1000) wenigstens ein Tragelement (10A, 10B) nach einem der Ansprüche 1 bis 9 und wenigstens eine Basisschiene (104) aufweist, die mit dem wenigstens einem Tragelement (10A, 10B) verbindbar ist.

11. Tragsystem (1000) nach Anspruch 10,
wobei das Tragsystem (1000) mehrere Tragelemente (10A, 10B) aufweist, wobei an der wenigstens einen Basisschiene (104) wenigstens zwei Tragelemente (10A, 10B) angeordnet sind, die zum Abstützen eines Modulrahmens eines Solarmoduls (190) zusammenwirken,
und/oder wobei das Tragsystem (1000) wenigstens eine Ballastschiene (146) zum Tragen von Ballastkörpern (186) aufweist, wobei die wenigstens eine Ballastschiene (146) mit der wenigstens einen Basisschiene (104) gekoppelt ist.

12. Tragsystem (1000) nach einem der Ansprüche 10 oder 11,
wobei das Tragsystem (1000) wenigstens ein Verbindungsprofil (130, 164) zur Verbindung von wenigstens zwei Schienen aufweist,
wobei das Verbindungsprofil (130; 164) wenigstens ein Halteelement (132, 166) aufweist,
wobei das wenigstens eine Halteelement (132, 166) wenigstens eine Kralle (170) hat, die dazu ausgebildet ist, das Verbindungsprofil (130; 164) an zumindest einer der Schienen (130; 164) zu halten.

13. Tragsystem (1000) nach Anspruch 12,
wobei das wenigstens eine Verbindungsprofil (130; 164) dazu ausgebildet ist, über eine translatorische Bewegung mit wenigstens einer der Schienen (104; 146) gekoppelt zu werden,
und/oder wobei die wenigstens eine Kralle (170) derart ausgebildet ist, dass sie eine Relativbewegung zwischen dem Verbindungsprofil (130; 164) und einer der Schienen (104; 146) zumindest in einer Richtung verhindert.

14. Tragsystem (1000) nach einem der Ansprüche 11 bis 13,
wobei das wenigstens eine Haltelement (132; 166) an der Oberseite oder der Unterseite des wenigstens einen Verbindungsprofils (130; 164) angebracht ist.

15. Tragsystem (1000) nach einem der Ansprüche 11 bis 14,
wobei das Verbindungsprofil (130, 164) und die wenigstens eine Schiene (104, 146) Teil eines Verbindungssystems sind, und
wobei das Verbindungsprofil (130, 164) und die wenigstens eine Schiene (104, 146) korrespondierend ausgebildet sind, um über eine translatorische Bewegung verbindbar zu sein.

## Claims

1. A support element (10A, 10B) for a support system (1000) for supporting a solar module,
wherein the support element (10) comprises at least one first coupling portion (12) and at least one second coupling portion (14),
wherein the at least one first coupling portion (12) comprises at least one hooking receptacle (18) and at least one locking formation (16), wherein the at least one locking formation (16) is formed on an outer face and/or an inner face of the support element (10),
wherein the at least one first coupling portion comprises a longitudinal channel (22) for receiving at least one connecting element (78), wherein the at least one longitudinal channel (22) is arranged between the at least one locking formation (16) and the at least one hooking receptacle (18),
wherein the first coupling portion (12) is configured to be connectable both to a corresponding support element (10A, 10B) and to a base rail (104).

2. The support element (10A, 10B) of claim 1,
wherein the at least one longitudinal channel (22) comprises at least one channel opening (24) extending between the hooking receptacle (18) and the at least one locking formation (16).

3. The support element (10A, 10B) of claim 1 or 2,
wherein the at least one locking formation (16) is formed on the outer face of a wall (60) of the at least one longitudinal channel (22),
and/or wherein the at least one locking formation comprises at least one locking projection (50) and/or at least one locking lug (48) extending outwards or inwards.

4. The support element (10A, 10B) of any one of claims 1 to 3,
wherein the at least one locking formation (16), the at least one hooking receptacle (18) and the at least one longitudinal channel (22) are formed together on an end portion of the support element (10A, 10B).

5. The support element (10A) of any one of claims 1 to 4,
wherein the second coupling portion (14) comprises at least one locking formation (28) formed on an outer face or on an inner face of the at least one support element (10A),
and/or wherein the at least one second coupling portion (14) comprises at least one inwardly directed hook (30).

6. The support element (10A) of claim 5,
wherein the at least one locking formation (28) comprises at least one inwardly directed locking projection (70, 72).

7. The support element (10A) of any one of claims 1 to 6,
wherein the first coupling portion (12) or the second coupling portion (14) comprises at least one curved sidewall portion (EA1, EA2).

8. The support element (10B) of any one of claims 1 to 3,
wherein the first coupling portion (12) and the second coupling portion (14) are connected to each other in an articulated manner.

9. The support element (10B) of claim 8,
wherein the first coupling portion (12) or the second coupling portion (14) comprises at least one axle mount (80), wherein the respective other first or second coupling portion (12, 14) has at least one axle portion (82) which is received in the at least one axle mount (80),
and/or wherein the second coupling portion (14) comprises a support surface (94) for supporting a solar module (188), wherein the articulated connection between the first coupling portion (12) and the second coupling portion (14) allows the solar module (188) to be supported flat on the support surface (94).

10. A support system (1000) for attaching a solar module to a roof,
in particular a flat roof, wherein the support system (1000) comprises at least one support element (10A, 10B) of any one of claims 1 to 9 and at least one base rail (104) which is connectable to the at least one support element (10A, 10B).

11. The support system (1000) of claim 10,
wherein the support system (1000) comprises several support elements (10A, 10B), wherein at least two support elements (10A, 10B) are arranged on the at least one base rail (104), which cooperate to support a module frame of a solar module (190),
and/or wherein the support system (1000) comprises at least one ballast rail (146) for supporting ballast bodies (186), wherein the at least one ballast rail (146) is coupled to the at least one base rail (104).

12. The support system (1000) of claim 10 or 11,
wherein the support system (1000) comprises at least one connecting profile (130, 164) to connect to at least two rails,
wherein the connecting profile (130; 164) comprises at least one holding element (132, 166),
wherein the at least one holding element (132, 166) has at least one claw (170) configured to hold the connecting profile (130; 164) on at least one of the rails (130; 164).

13. The support system (1000) of claim 12,
wherein the at least one connecting profile (130; 164) is configured to couple to at least one of the rails (104; 146) via translatory movement,
and/or wherein the at least one claw (170) is configured to prevent relative movement between the connecting profile (130; 164) and one of the rails (104; 146) in at least one direction.

14. The support system (1000) of any one of claims 11 to 13,
wherein the at least one holding element (132; 166) is attached to the upper side or the lower side of the at least one connecting profile (130; 164).

15. The support system (1000) of any one of claims 11 to 14,
wherein the connecting profile (130, 164) and the at least one rail (104, 146) are part of a connecting system, and
wherein the connecting profile (130, 164) and the at least one rail (104, 146) are configured to correspond with each other to be connectable via translatory movement.

## Revendications

1. Élément de support (10A, 10B) pour un système de support (1000) destiné à supporter un module solaire,
dans lequel l'élément de support (10) comprend au moins une première partie d'accouplement (12) et au moins une deuxième partie d'accouplement (14),
dans lequel ladite au moins une première partie d'accouplement (12) comprend au moins un logement d'accrochage (18) et au moins une formation d'encliquetage (16), ladite au moins une formation d'encliquetage (16) étant formée sur un côté extérieur et/ou un côté intérieur de l'élément de support (10),
dans lequel ladite au moins une première partie d'accouplement comprend une rainure longitudinale (22) destinée à recevoir au moins un élément de liaison (78), ladite au moins une rainure longitudinale (22) étant disposée entre ladite au moins une formation d'encliquetage (16) et ledit au moins un logement d'accrochage (18),
dans lequel la première partie d'accouplement (12) est conçue de telle sorte qu'elle peut être reliée aussi bien à un élément de support correspondant (10A, 10B) qu'à un rail de base (104).

2. Élément de support (10A, 10B) selon la revendication 1,
dans lequel ladite au moins une rainure longitudinale (22) comprend au moins une ouverture de rainure (24) qui s'étend entre le logement d'accrochage (18) et ladite au moins une formation d'encliquetage (16).

3. Élément de support (10A, 10B) selon l'une des revendications 1 ou 2,
dans lequel ladite au moins une formation d'encliquetage (16) est formée sur le côté extérieur d'une paroi (60) de ladite au moins une rainure longitudinale (22),
et/ou dans lequel ladite au moins une formation d'encliquetage comprend au moins une saillie d'encliquetage (50) et/ou au moins un ergot d'encliquetage (48) qui s'étendent vers l'extérieur ou vers l'intérieur.

4. Élément de support (10A, 10B) selon l'une quelconque des revendications 1 à 3,
dans lequel ladite au moins une formation d'encliquetage (16), ledit au moins un logement d'accrochage (18) et ladite au moins une rainure longitudinale (22) sont formés ensemble sur une partie d'extrémité de l'élément de support (10A, 10B).

5. Élément de support (10A) selon l'une quelconque des revendications 1 à 4,
dans lequel la deuxième partie d'accouplement (14) comprend au moins une formation d'encliquetage (28) qui est formée sur un côté extérieur ou sur un côté intérieur dudit au moins un élément de support (10A),
et/ou dans lequel ladite au moins une deuxième partie d'accouplement (14) comprend au moins un crochet (30) dirigé vers l'intérieur.

6. Élément de support (10A) selon la revendication 5,
dans lequel ladite au moins une formation d'encliquetage (28) comprend au moins une saillie d'encliquetage (70, 72) dirigée vers l'intérieur.

7. Élément de support (10A) selon l'une quelconque des revendications 1 à 6,
dans lequel la première partie d'accouplement (12) ou la deuxième partie d'accouplement (14) comprend au moins une partie de paroi latérale courbée (EA1, EA2).

8. Élément de support (10B) selon l'une quelconque des revendications 1 à 3, dans lequel la première partie d'accouplement (12) et la deuxième partie d'accouplement (14) sont reliées de manière articulée l'une à l'autre.

9. Élément de support (10B) selon la revendication 8,
dans lequel la première partie d'accouplement (12) ou la deuxième partie d'accouplement (14) comprend au moins un logement d'axe (80), l'autre première ou deuxième partie d'accouplement (12, 14) présentant au moins une partie d'axe (82) qui est logée dans ledit au moins un logement d'axe (80),
et/ou dans lequel la deuxième partie d'accouplement (14) comprend une surface d'appui (94) pour l'appui d'un module solaire (188), la liaison articulée entre la première partie d'accouplement (12) et la deuxième partie d'accouplement (14) permettant un appui plat du module solaire (188) sur la surface d'appui (94).

10. Système de support (1000) pour la fixation d'un module solaire sur un toit, en particulier sur un toit plat, le système de support (1000) comprenant au moins un élément de support (10A, 10B) selon l'une quelconque des revendications 1 à 9 et au moins un rail de base (104) qui peut être relié audit au moins un élément de support (10A, 10B).

11. Système de support (1000) selon la revendication 10,
dans lequel le système de support (1000) comprend plusieurs éléments de support (10A, 10B), au moins deux éléments de support (10A, 10B) étant disposés sur ledit au moins un rail de base (104), lesquels coopèrent pour soutenir un cadre de module d'un module solaire (190),
et/ou dans lequel le système de support (1000) comprend au moins un rail de lestage (146) destiné à supporter des corps de lestage (186), ledit au moins un rail de lestage (146) étant accouplé audit au moins un rail de base (104).

12. Système de support (1000) selon l'une des revendications 10 ou 11,
dans lequel le système de support (1000) comprend au moins un profilé de liaison (130, 164) destiné à relier au moins deux rails, le profilé de liaison (130 ; 164) comprenant au moins un élément de maintien (132, 166),
dans lequel ledit au moins un élément de maintien (132, 166) comprend au moins une griffe (170) qui est conçue pour maintenir le profilé de liaison (130 ; 164) sur au moins l'un des rails (130 ; 164).

13. Système de support (1000) selon la revendication 12,
dans lequel ledit au moins un profilé de liaison (130 ; 164) est conçu pour être accouplé à au moins l'un des rails (104 ; 146),
et/ou dans lequel ladite au moins une griffe (170) est conçue de manière à empêcher un mouvement relatif entre le profilé de liaison (130 ; 164) et l'un des rails (104 ; 146) au moins dans une direction.

14. Système de support (1000) selon l'une quelconque des revendications 11 à 13,
dans lequel ledit au moins un élément de maintien (132 ; 166) est fixé sur la face supérieure ou la face inférieure dudit au moins un profilé de liaison (130 ; 164).

15. Système de support (1000) selon l'une quelconque des revendications 11 à 14,
dans lequel le profilé de liaison (130, 164) et ledit au moins un rail (104, 146) font partie d'un système de liaison, et
dans lequel le profilé de liaison (130, 164) et ledit au moins un rail (104, 146) sont conçus de manière correspondante pour pouvoir être reliés par un mouvement de translation.
